(19) Europäisches Patentamt
European Patent Office
Office européen des brevets

(11) Veröffentlichungsnummer : **0 009 706**
**B1**

(12) **EUROPÄISCHE PATENTSCHRIFT**

(45) Veröffentlichungstag der Patentschrift : **22.09.82**

(51) Int. Cl.³ : **C 07 F 9/32**, C 08 G 79/04, D 06 M 13/32, D 06 M 15/62

(21) Anmeldenummer : **79103484.6**

(22) Anmeldetag : **17.09.79**

(54) **Organische Phosphor-Verbindungen mit 3-Hydroxyalkylphosphinsäureestergruppen, deren Herstellung und Verwendung.**

(30) Priorität : **27.09.78 DE 2841941**

(43) Veröffentlichungstag der Anmeldung : **16.04.80 (Patentblatt 80/08)**

(45) Bekanntmachung des Hinweises auf die Patenterteilung : **22.09.82 Patentblatt 82/38**

(84) Benannte Vertragsstaaten : **AT BE CH DE FR GB IT NL**

(56) Entgegenhaltungen :
**EP A 0 000 024**
**EP A 0 003 599**
**DE A 2 313 355**
**FR A 2 288 097**
**FR A 2 325 658**
**US A 3 711 579**

(73) Patentinhaber : **HOECHST AKTIENGESELLSCHAFT**
**Postfach 80 03 20**
**D-6230 Frankfurt/Main 80 (DE)**

(72) Erfinder : **Dürsch, Walter, Dr.**
**In der Braubach 4**
**D-6240 Königstein/Taunus (DE)**
Erfinder : **Linke, Fritz, Dr.**
**Im Flemetz 8**
**D-6240 Königstein/Taunus (DE)**
Erfinder : **Kleiner, Hans-Jerg, Dr.**
**Altkönigstrasse 11a**
**D-6242 Kronberg/Taunus (DE)**

**EP 0 009 706 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Organische Phosphor-Verbindungen mit 3-Hydroxyalkylphosphinsäureestergruppen, deren Herstellung und Verwendung

Der Bedarf an Phosphor-Verbindungen mit vernetzbaren Hydroxyl Gruppen ist in den letzten Jahren erheblich gestiegen. Z.B. sind für optimale permanente Flammhemmausrüstungen, vor allem von textilen Bodenbelagen, je nach chemischer Substrat-Beschaffenheit « maßgeschneiderte » wasserlösliche Phosphor-Verbindungen mit speziellen niederen oder höheren Hydroxyl-Zahlen, mit hohem Phosphor-Gehalt und speziellen Verzweigungsgraden notwendig.

In der FR-A 2 325 658 werden phosphororganische Verbindungen als Flammhemmittel beschrieben, die durch Umsetzung eines Alkohols mit Phospholan erhalten werden. Dabei entstehen aber, bedingt durch die Natur des Phospholans als cyclisches Anhydrid, zwangsläufig saure Gruppen, die in einer weiteren Reaktion durch Umsetzung mit Ethylen abgebunden werden. Durch diese Reaktion erhöht sich aber der Anteil des Kohlenstoffs im Molekül und entsprechend sinkt der Phosphor-Anteil. Dadurch sind diese Produkte nur bedingt für den Flammschutz geeignet, da bei diesem Verwendungszweck ein möglichst hoher Phosphor-Anteil notwendig ist. Im Gegensatz hierzu zeigen die im folgenden beschriebenen Verbindungen, die keine nachträgliche Oxethylierung erfordern, deutlich höhere Gehalte an Phosphor.

Gegenstand der Erfindung sind organische Phosphor-Verbindungen mit 3-Hydroxyalkylphosphinsäuregruppen der allgemeinen Formel I

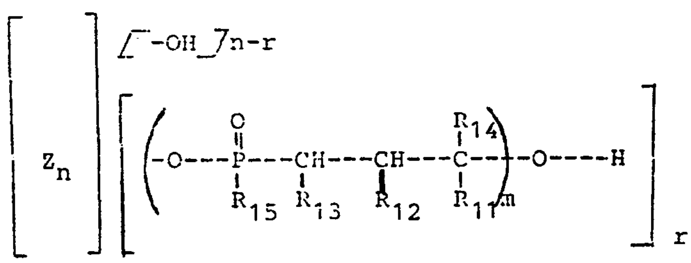

(I)

wobei die einzelnen Symbole in der obigen Formel I folgende Bedeutung haben :

n ist eine ganze Zahl von 1 bis 6, vorzugsweise 1 bis 4 ;

r ist eine ganze Zahl von 1 bis 6, vorzugsweise die gleiche Zahl wie n ;

m ist 1, wenn $r < n$ ist oder eine Zahl von 1 bis 150, bevorzugt 2 bis 10, wenn $r = n$ ist ;

$R_{11}$, $R_{12}$, $R_{13}$, $R_{14}$ sind gleiche oder verschiedene gegebenenfalls ungesättigte und/oder verzweigte Alkylste mit 1 bis 4 Kohlenstoffatomen oder bevorzugt Wasserstoff ;

$R_{15}$ hat die gleiche Bedeutung wie $R_{11}$ außer Wasserstoff, bevorzugt $(C_1$-$C_3$-)-Alkyl, besonders bevorzugt Methyl ;

$Z_n$ ist ein n-wertiger Rest aus der Gruppe geradkettiger oder verzweigter aliphatischer oder araliphatischer Kohlenwasserstoffreste mit 1 bis 22, vorzugsweise 1 bis 8 C-Atomen, die gegebenenfalls durch bis zu 2-S- und/oder NR-Reste mit $R = (C_1$-$C_4$-)-Alkyl, insbesondere Methyl, unterbrochen und/oder durch Fluor, Chlor, Brom-Atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können ; oder ein äthergruppenhaltiger Kohlenwasserstoffrest mit Äquivalent-Gewichten bis zu 8 000, bevorzugt bis zu 4 000, die sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 bis 22, vorzugsweise 1 bis 10, C-Atomen ergeben, wobei die araliphatischen bzw. die aromatischen Reste sich von Benzol, Alkyl- bzw. Alkylenbenzolen mit bis 18 C-Atomen, Naphthalin, Diphenyl, Diphenylmethan, Diphenyläthan oder 2,2-Diphenylpropan ableiten, und gegebenenfalls im Kern durch 1 oder 2 Methoxy- bzw. Äthoxygruppen bzw. im Kern und/oder in den Seitenketten durch F-, Cl-, Br-Atome, vorzugsweise bis fünfmal substituiert sein können ; oder ein phosphorhaltiger Rest der allgemeinen Formel

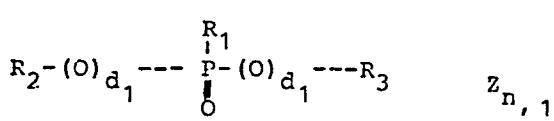

in dem

$d_1$, unabhängig voneinander 0 und 1 und

$R_1$ Alkyl-, Hydroxyalkyl-, gegebenenfalls (C1-C2)-alkyliertes bzw. -dialkyliertes Aminoalkyl, Halogen-(vorzugsweise Cl-)-alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br substituiert sein kann, sind und

$R_2$, $R_3$ das gleiche wie $R_1$ bedeuten mit der Einschränkung, daß mindestens einer der Reste $R_2$ oder $R_3$ ein Alkylenrest mit 2-5 C-Atomen ist ;

oder ein phosphorhaltiger Rest der Formel

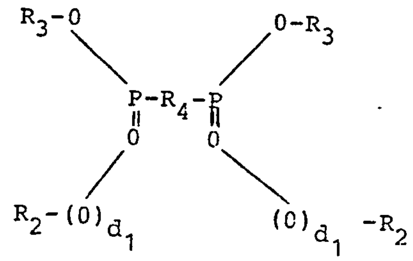

$Z_{n,2}$

in dem $d_1$, $R_2$, $R_3$ Bedeutungen wie in $Z_{n,1}$ haben und $R_4$ einen geradkettigen oder verzweigten ($C_1$-$C_{10}$-)-Alkylen-, Phenylen-, Xylylen-Rest oder einen Rest

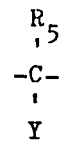

mit Y = OH, $NH_2$ und $R_5$ ($C_1$-$C_3$-)-Alkyl bedeuten ;
oder ein phosphorhaltiger Rest der allgemeinen Formel

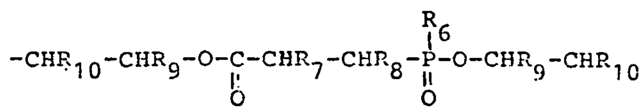

$Z_{n,3}$

in dem

$R_6$ eine ($C_1$-$C_4$)-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkylengruppe mit bis zu 4 C-Atomen, insbesondere Vinyl und Allyl, eine Phenyl oder Benzylgruppe, die gegebenenfalls durch Halogen, vorzugsweise Chlor und/oder Brom, substituiert, vorzugsweise 1- bis 3-mal substituiert sein kann,

$R_7$ Wasserstoff oder eine ($C_1$-$C_4$)-Alkylgruppe, bevorzugt Methyl,

$R_8$ Wasserstoff oder eine ($C_1$-$C_2$)-Alkylgruppe, bevorzugt Methyl, wobei mindestens einer der Reste $R_7$, $R_8$ Wasserstoff ist,

$R_9$ Wasserstoff, Methyl, Chlormethyl,

$R_{10}$ Wasserstoff, Methyl oder Äthyl, vorzugsweise Wasserstoff bedeuten.

Die Verbindungen der Formel I werden erhalten, in dem man 1 Mol einer Verbindung der allgemeinen Formel II

$$Z_n(OH)_n \qquad (II)$$

mit 1 bis n.25 Molen von in 2-Stellung substituierten 2-Oxo-oxa-phospholanen der allgemeinen Formel III

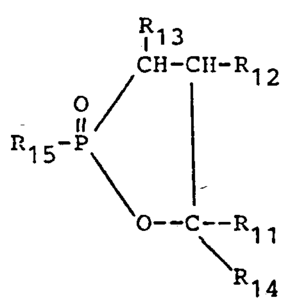

(III)

umsetzt, wobei n, $R_{11}$, $R_{12}$, $R_{13}$, $R_{14}$ und $R_{15}$ und $Z_n$ die oben angegebenen Bedeutungen haben.

Die Alkohole der Formel II $Z_n(-OH)_n$ sind alle nach bekannten Methoden zugänglich. Von den einsetzbaren einwertigen organischen Hydroxylverbindungen mit n = 1 kommen z.B. alle leicht zugänglichen aliphatischen geradkettigen oder verzweigten Alkohole mit 1 bis 22 C-Atomen in Betracht. Als wichtigste seien z.B. genannt : Methanol, Äthanol, n-Propanol, i-Propanol, n-Butanol, sec.-Butanol, n-Hexanol, 2-Äthyl-butanol-1, n-Octanol, 2-Äthyl-hexanol-1, n-Dodecanol, n-Hexadecanol, n-Octadecanol, wobei die Alkohole mit 1 bis 4 C-Atomen bevorzugt sind. Noch besser als monofunktionelle Alkohole sind

mehrwertige mit n = 2-6 geeignet.

Von den mehrwertigen aliphatischen Polyolen mit n = 2-6 seien z.B. genannt: Äthylenglykol, 1,2-Propylenglykol, 1,3-Propylenglykol, 1,4-Butandiol, Neopentylglykol, 1,6-Hexandiol, Glyzerin, Trishydroxymethyläthan, Trishydroxymethylpropan, Pentaerythrit, Sorbit, Mannit. Insbesondere sind Glyzerin und 1,4-Butandiol geeignet.

Von ungesättigten Alkoholen seien z.B. genannt: n-Buten-2-ol-1, 1,4-Buten-diol und Allylalkohol, wobei 1,4-Buten-diol als zweiwertiger Alkohol bevorzugt ist.

Von den zahlreichen Verbindungen, bei denen in einem aliphatischen Kohlenwasserstoffrest eine oder mehrere $-CH_2$-Gruppen durch Ätherbrücken -0- ersetzt sind, sind z.B. geeignet die Umsetzungsprodukte von einwertigen Alkoholen mit einem oder mehreren Molekülen von Alkylenoxiden oder Alkylencarbonaten, wie z.B. 2-Methoxyäthanol, 2-Äthoxyäthanol, 2-n-Butoxy-äthanol, 2-(2'-Äthyl-hexyloxy)-äthanol, 2-n-Dodecyloxy-äthanol, ferner die Umsetzungsprodukte von 1 Mol Methanol, 1 Mol Äthanol oder 1 Mol Isopropanol und 2 Mol Äthylenoxid oder Äthylencarbonat sog. Methyldiglykol, Äthyldiglykol bzw. Isopropyldiglykol, ferner Umsetzungsprodukte von 3 bis 100 Molekülen Äthylenoxid oder Äthylencarbonat mit 1 Mol Methanol, Äthanol, Isobutanol, Dodecanol oder Oleylalkohol.

Geeignete Umsetzungsprodukte von Äthylenoxid und zweiwertigen Alkoholen sind z.B. sog. Diglykol, sog. Triglykol und die höheren Umsetzungsprodukte von Äthylenoxid und/oder Äthylencarbonat mit Wasser oder Äthylenglykol, die sog. Polyäthylenglykole verschiedener Molekülgrößen bis zum mittleren Molekulargewicht von 8 000, insbesondere Diglykol und Triglykol, ferner sind geeignet z.B. die Addukte von 1 bis 150 Molekülen Äthylenoxid und/oder Äthylencarbonat mit drei- oder höher-wertigen Alkoholen (n = 3-6), wie z.B. Glyzerin, Trishydroxymethylpropan oder Pentaerythrit.

Neben Umsetzungsprodukten von Äthylenoxid und/oder Äthylencarbonat an ein- oder mehrwertige Alkohole kommen auch Umsetzungsprodukte aus ein- und mehrwertigen Alkoholen mit anderen 1,2-Alkylenoxiden und/oder 1,2-Alkylencarbonaten, wie vor allem 1,2-Propylenoxid, 1,2-Propylencarbonat oder Epichlorhydrin, in Betracht, ebenso die Umsetzungsprodukte von Äthylenoxid und/oder Äthylencarbonat mit Poly-1,2-propylenglykolen, die wie bekannt als oberflächenaktive Verbindungen in großer Variationsbreite hergestellt werden. Besonders erwähnt seien entsprechende Poly-1,2-propylenglykole und entsprechende Addukte von Äthylenoxid und/oder Äthylencarbonat an Poly-1,2-propylenglykole mit Molgewichten bis zu 8 000, bevorzugt bis zu 4 000.

Die Kohlenwasserstoffkette kanns auch durch 2 S oder NR-Gruppen mit R = $C_1$-$C_4$-Alkyl unterbrochen sein. Diese Verbindungen können z.B. besonders einfach durch Umsetzung von einem oder mehreren Molekülen von 1,2-Alkylenoxiden und/oder 1,2-Alkylencarbonaten mit Ammoniak, primären oder sekundären Aminen, Schwefelwasserstoff, Merkaptanen und mit Sauerstoffsäuren des Phosphors, ($C_6$-$C_6$)-Carbonsäuren bzw. Dicarbonsäuren erhalten werden.

Von deren Umsetzungsprodukten mit 1,2-Alkylenoxiden bzw. 1,2-Alkylencarbonaten seien z.B. genannt:

Mit N im Molekül: Monoäthanolamin, Diäthanolamin, Di-propanol-2-amin, tertiäre Alkanolamine, wie z.B. Triäthanolamin, Methyldiäthanolamin, n-Butyl-diäthanolamin, Tetrahydroxyäthyläthylendiamin, Pentahydroxyäthyl-diäthylentriamin, n-Dodexyldiäthanolamin, Dimethyläthanolamin, n-Butyl-methyläthanolamin, Di-n-butyl-äthanolamin, n-Dodecylmethyläthanolamin und entsprechend höhere Umsetzungsprodukte dieser tertiären Amine mit bis zu 150 Molen Äthylenoxid bzw. Äthylencarbonat oder Propylenoxid bzw. Propylencarbonat.

Mit S im Molekül: Bis-(2-hydroxyäthyl)-sulfid, Bis-(2-hydroxypropyl)-sulfid, Bis-(2-hydroxyäthyl)-sulfon und ihre Umsetzungsprodukte mit weiterem Äthylenoxid bzw. Äthylencarbonat oder Propylenoxid bzw. Propylencarbonat bis zu Molgewichten von 8 000.

Mit P im Molekül: Neutrale Umsetzungsprodukte von 1,2-Alkylenoxiden, wie Athylenoxid, Propylenoxid, Epichlorhydrin, vor allem Äthylenoxid oder Äthylencarbonat mit ein- und mehrwertigen Alkanphosphonsäuren mit 1 bis 18 C-Atomen, wie z.B. mit n-Butan-, Isobutan-, 2-Äthyl-hexan-, n-Octan-, Decan-, Dodecan-, Tetradecan-phosphonsäure, insbesondere aber mit Methan-, Äthan-, Propan- und Vinylphosphonsäure und 1,2-Äthandiphosphonsäure, ferner mit ein- oder mehrwertigen Dialkyl-phosphinsäuren, wie z.B. Methyl-butyl-phosphinsäure, Methyl-n-octyl-phosphinsäure, Methyl-n-dodecyl-phosphinsäure und besonders Dimethyl-, Äthyl-methyl-, Methyl-propyl-, Methyl-vinyl-phosphinsäure und Äthan-1,2-bis-(methyl-phosphinsäure) und ferner auch Umsetzungsprodukte von 1 bis 7 Mol Alkylenoxid oder Äthylencarbonat mit einwertigen aliphatischen Carbonsäuren, wie z.B. Crotonsäure, vor allem Essigsäure, Propionsäure, Buttersäure und mehrwertige aliphatische Carbonsäuren, wie z.B. Bernsteinsäure und Adipinsäure.

Neben derartigen durch Oxyalkylierungsreaktionen sehr leicht zugänglichen Hydroxylverbindungen mit Heteroatomen N, S und P sind noch zahlreiche weitere Verbindungen mit Hydroxylgruppen und gegebenenfalls diesen Heteroatomen und/oder Carbonsäureestergruppen in der Kohlenwasserstoffkette geeignet, von denen nur genannt seien z.B. Oligo-Kondensate, die entstehen durch Umsetzung von Dicarbonsäuren mit mehrwertigen Alkoholen, ferner Glykolsäuremethylester oder 2-Hydroxyäthancarbonsäureäthylester.

Geeignet sind außerdem z.B. Hydroxymethan-phosphonsäuredimethylester, 2-Hydroxyäthan-phosphonsäurediäthylester, 3-Hydroxypropan-phosphonsäure-di-n-butylester und analoge Verbindungen aus der Phosphinsäurereihe, wie z.B. Hydroxymethyl-methyl-phosphinsäure-methylester, 2-Hydroxyäthylmethyl-phosphinsäure-äthylester, 3-Hydroxypropyl-methyl-phosphinsäure-2'-äthyl-hexylester, Hydroxymethyl-dimethyl-phosphinoxid, 2-Hydroxyäthyl-dimethyl-phosphinoxid.

Alle genannten und nicht genannten analogen aliphatischen Hydroxylverbindungen können durch die Halogenatome Chlor, Brom, Fluor besonders durch Chlor oder Brom, substituiert sein. Erwähnt seien z.B. die leicht zugänglichen und wegen ihres günstigen Flammschutzverhaltens interessanten Verbindungen 2-Bromäthanol, 2,3-Dibrompropanol-1,2,3-Dibrombutandiol-1, Dibrombernsteinsäure-bis-(2-hydroxyäthyl)-ester, 2,3-Dibrompropan-phosphonsäure-bis(2-hydroxy-äthyl)-ester, 2-Hydroxyäthanphosphonsäure-bis-(2,3-dibrompropyl)-ester, ferner Chloräthanol, 2,3-Dichlor-propanol-1, 1,3-Dichlorpropanol-2, 2,3-Dichlor-butandiol-1,4, 2-Hydroxyäthanphosphonsäure-bis(2,3-dichlorpropyl)-ester, 1-Chlor-vinylphosphonsäure-bis-(2-hydroxyäthyl)-ester.

Sehr mannigfaltig ist auch die Auswahl der geeigneten äthergruppenhaltigen aromatischen Verbindungen, die n OH-Reste tragen. Es kommen in Betracht alle Oxalkylierungsprodukte von sogenannten Phenolen im weiteren Sinne, wie z.B. Phenol, Brenzcatechin, Resorcin, Hydrochinon, Pyrogallol, Oxyhydrochinon, Phloroglucin, die verschiedenen Tetra- und Pentahydroxybenzole, Hexaoxybenzol, α-Naphthol, β-Naphthol, ferner von Hydroxynaphthalinen mit mehr als einer Hydroxylgruppe, wie z.B. 1,2-, 1.3-, 1,4-, 1,5-, 1,6-, 1,7-, 1,8-, 2,3-Dihydroxy-naphthalin, ferner 4-Hydroxydiphenyl, 4,4'-Dihydroxydiphenyl und — wegen des günstigen Preises — vor allem von 2,2-Bis-(4-hydroxyphenyl)-propan und 4,4'-Bis-(4-hydroxyphenyl)-methan mit Molen bis zu 8 000. Auch die Oxalkylate teilverätherteter mehrwertiger aromatischer Hydroxylverbindungen, wie z.B. Hydrochinon-monomethyläther oder Resorcinmono-äthyläther, sind geeignet.

Wegen der günstigen Beeinflussung der Flammschutzeigenschaften sind aromatische Chlor- und besonders Brom-hydroxy-Verbindungen von besonderem Interesse, wie z.B. die 2-Hydroxy-äthyläther von 2,4,6-Tribrom-phenol, Pentabrom-phenol, 2,4,6-Trichlor-phenol oder Pentachlorphenol und von 2,2-Bis-(4-hydroxy-3,5-dibromphenyl)-propan.

Geeignet sind ferner die Oxalkylate aromatischer Hydroxyverbindungen mit Alkyl-Seitengruppen mit insgesamt bis zu 18 C-Atomen, wie z.B. von o-, m- bzw. o-Kresol, Thymol, 4-tert.-Butylphenol, n-Nonylphenol, Isotridecylphenol mit Molgewichten bis zu 8 000.

Unter den araliphatischen und aromatischen Verbindungen sind ferner geeignet alle araliphatischen Verbindungen mit alkoholischen Hydroxylgruppen, wie z.B. Benzylalkohol und alle Ester, die durch Oxyalkylierung von aromatischen Verbindungen, die freie Carbonsäure-, Phosphonsäure- oder Phosphinsäurereste enthalten, entstehen.

Zur Herstellung von aromatischen Ausgangsmaterialien II mit alkoholischen Hydroxylgruppen kommen außer den bereits aufgeführten aromatischen Verbindungen mit phenolischen Hydroxylgruppen für die Umsetzung mit 1,2-Alkylenoxiden oder 1,2-Alkylencarbonaten daher vor allem z.B. aromatische Mono- und Dicarbonsäuren, wie z.B. Bezoesäure, Phthalsäure, Isophthalsäure, Terephthalsäure, 1-Naphthalindicarbonsäuren, aber auch aromatische Hydroxycarbonsäure wie z.B. die drei verschiedenen Hydroxy-benzoesäuren, die verschiedenen Naphthol-carbonsäuren, 4,4'-Diphenyl-dicarbonsäure etc. in Betracht.

Ebenso sind z.B. alle anderen Brom, Chlor oder Fluor enthaltenden aromatischen Carbonsäuren, die sich von Benzol und Naphthalin ableiten, wie vor allem z.B. Tetrabrom- bzw. Tetrachlornaphthalsäure geeignet.

Ebenso können aromatische Phosphon- bzw. Phosphinsäuren, wie z.B. Benzolphosphonsäure, 1,3-bzw. 1,4-Phenylen-di-phosphonsäure, Phenyl-methyl-phosphinsäure, 1,3- bzw. 1,4-Phenylen-bis-(methylphosphinsäure) durch Umsetzung mit den 1,2-Alkylenoxiden und/oder 1,2-Alkylencarbonaten in die entsprechenden 2-Hydroxyalkylester übergeführt werden.

Geeignete aromatische Verbindungen mit alkoholischen Hydroxylgruppen können aber auch durch vorhergehende Umsetzung von aromatischen Aminen oder Merkapto-Verbindungen mit 1,2-Alkylenoxiden und/oder 1,2-Alkylencarbonaten erhalten werden.

An für Oxalkylierungen geeigneten, aromatischen Aminogruppen enthaltenden Verbindungen seien z.B. genannt :

Anilin, Methylanilin, o-, m-, p-Phenylendiamin, die diversen o-, m-, p-Toluidine und -Anisidine, -Aminophenole, -Aminobenzoesäuren, Naphthylamine, die diversen Amino-naphthole, ferner 4,4'-Diaminodiphenylmethan, 4,4'-Benzidin, die möglichen Chlor- bzw. Bromaniline und vor allem 2,4,6-Tribromanilin etc., aber auch Phenylakylamine, wie vor allem Benzylamin oder Methylbenzylamin und Dibenzylamin.

Die aromatischen oxalkylierbaren Merkaptoverbindungen seien z.B. angeführt :

Phenylmerkaptan, p-Toluyl-merkaptan, 1- bzw. 2-Naphthylmerkaptan.

Unter allen Verbindungen II mit alkoholischen Hydroxylgruppen besonders bevorzugt sind solche, die zusätzlich vernetzungsfähige methylolisierbare oder polymerisierbare Reste enthalten, wie z.B. 2-Hydroxyäthyl-carbamat, 2-Hydroxyäthyl-harnstoff oder 2-Hydroxyäthyl-methacrylsäureester.

Man kann jeweils nur eine Verbindung der Formel II einsetzen, jedoch ist es auch möglich, Mischungen von mehreren Verbindungen II zu verwenden. Man erhält dann entsprechende Mischungen der Verbindungen I.

Die in 2-Stellung substituierten 2-Oxo-oxa-phospholane der Formel III können z.B. erhalten werden durch Addition von Methanphosphoningsäureestern der Formel IV

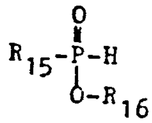

(IV)

wobei $R_{16}$ einen Alkylrest mit 1-6, bevorzugt 1-4 Kohlenstoffatomen bedeutet und einwertigen ungesättigten Alkoholen der allgemeinen Formel V

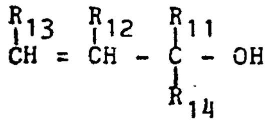

(V)

bei Gegenwart von Radikalspendern und Temperaturen von ca. 130-170 °C. Die dabei primär entstehenden 3-Hydroxyalkyl-alkylphosphonsäure-alkylester der allgemeinen Formel VI

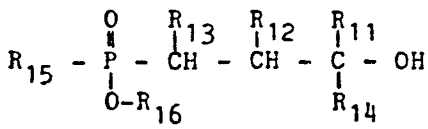

(VI)

gehen beim Erhitzen unter Abspaltung von Alkoholen der Formel VII

$$R_{16}—OH \qquad (VII)$$

in die 2-substituierten 2-Oxo-oxa-phospholane III über.

Durch die Kombination der verschiedenen variablen Reste $R_{14}$, $R_{13}$, $R_{12}$ und $R_{11}$ ergibt sich eine große Anzahl von geeigneten Verbindungen III.

Im einzelnen sind von den Verbindungen III z.B. geeignet :

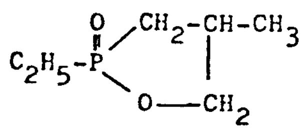

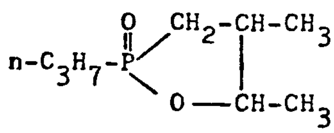

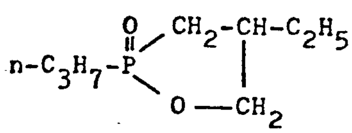

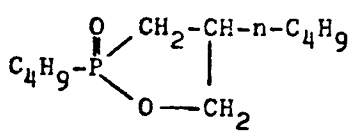

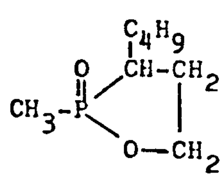

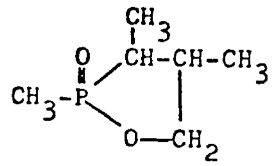

bevorzugt 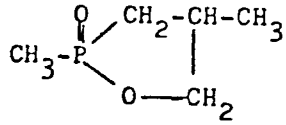 und

besonders bevorzugt 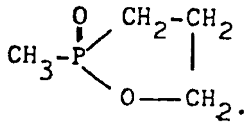

Man kann jeweils nur eine Verbindung der Formel III einsetzen. Es ist jedoch auch möglich, Mischungen mehrerer Verbindungen der Formel III zu verwenden. Man erhält dann Mischungen der Verbindungen der Formel I.

Die Molverhältnisse zwischen den 2-substituierten 2-Oxo-oxa-phospholanen III und den Alkoholen II können — je nach dem gewünschten Phosphor- und Hydroxyl-Gruppen-Gehält — in weiten Grenzen schwanken. Sie können liegen zwischen 1/n und n.m. Das heißt 1 Mol eines Alkohols $Z_n(—OH)_n$ kann 1 bis m.n (bzw. 150 n) Molen von III umgesetzt werden. Je größer m ist, um so hoher wird der P-Gehalt der Reaktionsprodukte und um so niedriger werden die Hydroxylgruppen-Gehalte bzw. die « Hydroxyl-Zahlen » (OHZ). Pro Hydroxylgruppe können maximal bis zu m = 150 Mole, bevorzugt m = 2-8 Mole III addiert werden.

Die Umsetzungen der Verbindungen II und III müssen bei Abwesenheit von Wasser durchgeführt werden. In vielen Fällen, vor allem wenn die Verbindungen II und III niedrigviskose Flüssigkeiten sind, ist die Verwendung von Lösungsmitteln überflüssig. Wenn es sich bei den Verbindungen II und/oder III jedoch um Substanzen handelt, die bei den gewählten Reaktionstemperaturen fest sind, empfield sich die Zugabe von wasserfreien inerten, relativ polaren Lösungs- bzw. Verdünnungsmitteln, die möglichst leicht flüchtig sein sollen, wie vor allem z.B. von Tetrahydrofuran, Dioxan, Aceton, 1,2-Dimethoxy-äthan, Acetonitril etc. Nach Durchführung der Umsetzungen müssen sie möglichst schonend — gegebenenfalls im Vakuum — wieder entfernt werden.

Die Reaktion kann auch bei Abwesenheit von Katalysatoren durchgeführt werden. Jedoch wirken alkalische Katalysatoren stark reaktionsbeschleunigend. Als stark alkalische Katalysatoren kommen besonders in Betracht die Alkalimetalle Lithium, Kalium und bevorzugt Natrium, Natriumamid und bevorzugt Natriumhydrid und Alkalialkoholate, wie vor allem Natriumäthylat und — wegen der geringen Verfärbungen — Natriummethylat in Form von hochprozentigen Lösungen in Methanol. Durch Mischen von Natriummethylat-Lösung mit den Verbindungen I und Abziehen des Methanols im Vakuum bei möglichst niederen Temperaturen, können z.B. sehr bequem Alkoholate des verwendeten Alkohols II erzeugt werden, die als alkalische Katalysatoren hervorragend eignen. Schwach alkalische Katalysatoren, wie z.B. Soda oder Pottasche beschleunigen die Reaktion nur bei erhöhten Temperaturen von ca. 60-200 °C.

Die Mol-Mengen an Alkalikatalysatoren richten sich besonders nach der Anzahl der Mole an Verbindungen III.

Pro Mol der Verbindungen III empfiehlt sich der Einsatz von 0,002-0,5 Mol, bevorzugt 0,01 bis 0,2 Mol, an Alkalikatalysatoren.

Durch Nebenreaktionen, vor allem durch Verseifung von Phosphinsäureestergruppen, wird ein Teil des Alkalikatalysator verbraucht. Um zu erkennen, ob noch ausreichende Mengen an freiem Alkali vorhanden sind, empfiehlt es sich Indikatoren, bevorzugt im Neutral-Bereich farblose Inikatoren, wie z.B. Phenolphthalein oder bevorzugt Thymolphthalein, zuzusetzen.

Falls erforderlich, kann überschüssiges freies Alkali durch Zugabe berechneter Mengen von anorganischen oder organischen Säuren bzw. Säurespendern, wie z.B. Schwefelsäure, Phosphorsäure, Äthanphosphonsäure, Essigsäure, Oxalsäure oder Essigsäureanhydrid nach Ende der Reaktion neutralisiert werden.

Die Reaktionstemperaturen können schwanken zwischen ca. − 10 °C und 200 °C. Sie sind sehr abhängig von der Tatsache, ob überhaupt Alkali-Katalysatoren verwendet werden und ob das Reaktionsmedium alkalisch ist oder nicht. Bevorzugte Temperatur-Bereiche sind bei Abwesenheit von Katalysatoren 100 °C bis 170 °C, bei Anwesenheit von stark alkalischen Katalysatoren, d.h. im alkalischen Medium, 10 °C bis 60 °C. Die Reaktionszeiten liegen bei 1 Minute bis ca. 48 Stunden, bevorzugt 5 Minuten bis 20 Stunden. Bei höheren Temperaturen, besonders bei Abwesenheit von Alkali-Katalysatoren bzw. Neutral- und im schwach sauren pH-Bereich, sind wesentlich längere Reaktionszeiten von bevorzugt ca. 1 bis 20 Stunden notwendig. Bei Gegenwart von starken Alkali-Katalysatoren genügen bevorzugt 5 Minuten bis 2 Stunden. Die Reaktion ist hierbei, besonders wenn kleine Moleküle von II und III eingesetzt werden, zum

Teil stark exotherm, so daß während der Zugabe von III zu II gegebenenfalls intensiv gekühlt werden muß und sich die portionsweise Zugabe der Verbindungen III zu den Mischungen aus den Alkoholen II und den entsprechenden Alkoholaten besonders empfiehlt. Es ist zwar auch möglich, die Verbindungen II und III zu mischen und Lösungen von Alkali-Katalysatoren (z.B. Natriummethylat-Lösungen in Methanol) zuzutropfen. Jedoch besteht dabei stets die Gefahr von Überhitzungen des Reaktionsgemischs und/oder (meist unerwünschter) Verseifungen erheblicher Anteile an Phosphinsäureestergruppen. Ähnliches gilt für den Fall, daß nur die 2-substituierten 2-Oxo-oxa-phospholane III vorgelegt und die Alkohole II, in Mischung oder gleichzeitig mit den Alkalikatalysatoren langsam eingetragen werden. Die Reaktion wird bei niederen Reaktionstemperaturen stets unterbrochen, wenn der pH-Wert unter ca. 5 bis 7 abfällt (gemessen mit feuchtem Indikatorpapier).

Die erhaltenen Reaktionsprodukte von der Formel I sind meist farblose Öle, manchmal, z.B. bei Verwendung von längerkettigen gesättigten Fettalkoholen, aber auch pasten- bzw. wachsartig. Ihre hydrozyl-Zahlen ( = mg KOH pro Gramm) können in weiten Grenzen schwanken zwischen ca. 10 bis ca. 900, bevorzugt zwischen 40 und 300.

Bemerkenswert ist, daß bei dem bevorzugten Herstellverfahren, d.h., im alkalischen pH-Bereich, sich die Addition der Verbindungen III und die Alkohole II bereits bei relativ sehr niederen Reaktionstemperaturen sehr glatt und schnell vollzieht und außerdem primäre und sekundäre Aminogruppen nicht reagieren. Dadurch können auch Alkohole II zum Einsatz kommen, die beliebige Aminogruppen oder thermisch nicht belastbare Reste, wie z.B. Methacryl-, Carbamat-, und Harnstoffreste, enthalten.

Die Verbindungen der Formel I sind wertvolle Zwischenprodukte für zahlreiche Phosphororganika. Von besonderem Interesse ist hierbei auch die Tatsache, daß durch Umsetzung mit nieder-molekularen Verbindungen der Formel III auch solche Alkohole der Formel II in wasserlösliche Addukte überführt werden können, die von Natur aus, beispielsweise durch eine längerkettige Alkylgruppe, nicht wasserlöslich sind. Man kann die Verbindungen I, vor allem, wenn sie sich von niedermolekularen mehrwertigen oder einwertigen vernetzbaren aliphatischen Alkoholen ableiten, jedoch auch direkt als Flammhemmittel für Textilmaterial verwenden. Zu diesem Zweck werden sie mit reaktiven Vernetzungsmitteln, gegebenenfalls in Gegenwart von Vernetzungskatalysatoren, auf dem Textilmaterial nach bekannten Verfahren fixiert. Man erhält auf diese Weise eine ausgezeichneten flammhemmenden Effekt.

Die erfindungsgemäßen Verbindungen I, können, da sie endständige Hydroxylgruppen enthalten, mit mehrfunktionellen N-Methylolverbindungen von Melamin, Harnstoff oder cyclischen Harnstoffverbindungen in Gegenwart von sauren Katalysatoren permanent vernetzt werden. Enthalten die Verbindungen I dagegen endständige Vinylgruppen, so können sie zusammen mit anderen oder ohne andere vinylgruppenhaltige Verbindungen im Beisein eines Polymeridationskatalysators polymerisiert bzw. copolymerisiert werden. Auch die auf diese Weise erhaltenen hochpolymeren Verbindungen zeichnen sich auf verschiedenen Textilmaterialien durch eine gute Permanenz aus.

Als vernetzende mehrfunktionelle N-Methylolverbindungen kommen in Frage z.B. Derivate von Amino-1,3,5-triazinen, wie Trimethylolmelamin, Hexamethylolmelamin, Trimethylolmelamintrimethyläther, Hexamethylolmelamin-pentamethyläther, Trimethylolmelamin-triisobutyläther, Dimethylol-acetoguanamin, ferner Derivate des Harnstoffes wie Dimethylolharnstoff, Dimethylolharnstoffdimethyläther, Dimethylolharnstoffdibutyläther, Dimethylolcycloäthylenharnstoff, Dimethylolcyclopropylenharnstoff, Dimethylol-4-methoxy-5-dimethylpropylenharnstoff, Dimethylol-5-hydroxypropylenharnstoff, 1,3-Dimethylol-4,5-dihydroxy-imidazolidon-(2), 1,3-Dimethylol-5-hydroxyäthylhexahydrotriazin-on-(2), Dimethyloluron und Dimethylolcarbamate, wie z.B. Dimethylolmethylcarbamat, Dimethylol-hydroxyäthylcarbamat und Dimethylolmethoxyäthylcarbamat.

Interessante Verbindungen, die sich besonders bewährt haben, sind die Melaminderivate, z.B. Trimethylolmelamintrimethyläther oder Hexamethylolmelaminpentamethyläther.

Als Katalysatoren, die im sauren pH-Bereich ihre Wirkung zeigen, werden im allgemeinen ca. 0,2 bis 5 Gew.-%, bevorzugt 0,4 bis 3 Gew.-%, anorganische oder organische Säuren zugesetzt oder deren Salze, die durch Hydrolyse oder durch eine Hitzebehandlung Säure freisetzen, wie z.B. Schwefelsäure, Salzsäure, Phosphorsäure, Trichloressigsäure, Maleinsäure, Weinsäure, Zitronensäure, Essigsäure oder deren Salze mit Ammoniak, Aminen oder mehrwertigen Metallen, vorzugsweise Salze von starken oder mittelstarken Säuren, wie Ammoniumsulfat, Ammoniumchlorid, Mono- und Diammoniumoxalat, Ammoniumnitrat, Magnesiumchlorid, Aluminiumchlorid, Zinkchlorid, Zinknitrat, Zinkfluoroborat, 2-Amino-2-methyl-propanol-hydrochlorid.

Die Vernetzungskatalysatoren können für sich allein oder in Mischungen untereinander den Ausrüstungsflotten zugesetzt werden. Solche — bevorzugt wäßrige — Ausrüstungsflotten enthalten im allgemeinen 2 bis 5 Gew.-%, vorzugsweise 2,5 bis 4,5 Gew.-% von Verbindungen der Formel I, ferner 5 bis 10 Gew.-%, vorzugsweise 7 bis 9 Gew.-%, vernetzende Substanzen, wie vorstehend angegeben, ferner 0,2 bis 5 Gew.-% Vernetzungskatalysatoren, sowie gegebenenfalls 5 bis 25 Gew.-% an Hochpolymeren, bevorzugt in Form von Dispersionen.

Wenn die erfindungsgemäßen Phosphorverbindungen Vinylgruppen enthalten, zeichnen sie sich durch eine gute Polymerisationsfähigkeit auf Textilsubstraten verschiedener Zusammensetzung aus. Die Polymerisation findet auch ohne Inertgasschutz und in Anwesenheit von Luftsauerstoff auf Textilsubstraten unter textiltechnischen Bedingungen, selbst bei einer sehr großen Substratoberfläche statt. Die auf diese Weise erhaltenen Polymerisate geben den verschiedensten textilen Flächengebilden einen sehr

guten Flammschutz. Als Polymerisationskatalysatoren werden den Ausrüstungsflötten im allgemeinen Radikalspender zugesetzt. Es ist jedoch auch möglich, z.B. während der Behandlung mit energiereichen Strahlen Radikale auf dem Fasermaterial zu erzeugen.

Als Polymerisationskatalysatoren werden die für die Polymerisation von Acrylaten bekannten Verbindungen verwendet. Also für wäßrige Ausrüstungsflotten z.B. Kalium- oder Ammonium-peroxidsulfat (-persulfat), Wasserstoffperoxid oder Wasserstoffperoxidspender wie $NH_4P_2O_7 \cdot H_2O_2 \cdot H_2O$ oder $(NH_2CONH_2) \cdot H_2O_2$ (in den Beispielen als Carbamid-Wasser-stoffperoxid bezeichnet), ferner auch Redoxkatalysator-Systeme, wie Wasserstoffperoxid und Ascorbinsäure oder Natriumbisulfit, Mangan(III) chlorid oder Eisen(II)-chlorid und Natriumsulfit, Natriumchlorat/Natriumbisulfit, Natriumperoxidsulfat/Natriumbisulfit.

Zur Erhöhung der Permanenz, insbesondere der Waschbeständigkeit des erfindungsgemäße erhaltenen Flammschutzes ist es von besonderem Vorteil, den Monomeren der Formel I weitere Comonomere zuzusetzen, insbesondere solche, die vernetzend wirken. Beispiele für solche Comonomere sind vor allem Acrylamid, N-Methylol-acryl-amid, Methylen-bis-acrylamid, N-Methylol-methylbisacrylamid, N,N'-Dimethylolmethylen-bisacrylamid, N-Formamidomethyl-acrylamid, Divinylbenzole, Triallylcyanursäureester, Imide und Anhydride der Acrylsäure und Methacrylsäure, 1,3,5-triazin. Verwendet man —C = C-gruppenhaltige Comonomere, die noch andere reaktionsfähige Gruppen besitzen, z.B. Acrylamid oder N-Methylolhaltige Verbindungen wie z.B. N-Methylol-methylenbisacrylamid, N,N'-Dimethyloldimethylenbisacrylamid, so können noch weitere bzw. zusätzliche Vernetzungskomponenten dem System zugesetzt werden, wie z.B. Derivate von Amino-1,3,5-triazinen wie Trimethylolmelamin, Hexamethylolmelamin, Hexamethylolmelamin-pentamethyläther, ferner Derivate des Harnstoffes, wie Dimethylolharnstoff, Dimethylolharnstoffdimethyläther, Dimethylolcycloäthylenharnstoff, Dimethylolcyclopropylenharnstoff, Dimethylolcarbamate, z.B. Dimethylolmethylcarbamat oder Dimethyloläthyl-carbamat.

Insgesamt betragen diese Zusätze zu den Monomeren der Formel I 10-300 Gew.-Teile, vorzugsweise 30 bis 180 Gew.-Teile, insbesondere 40-120 Gew.-Teile auf 1 000 Gew.-Teile Substrat.

Das textile Fasergut, auf dem die flammhemmende Ausrüstungen nach den oben beschriebenen Vernetzungsmöglichkeiten, sowohl nach dem Kondensations- als auch nach dem Polymerisationsverfahren, durchgeführt werden kann, ist verschieden. Es kommen Gewebe, Gewirke, Non-woven-fabrics, z.B. Nadelvliese für Wand- und Bodenbeläge und Tufting- bzw. Webteppiche in Frage. Gewebe bzw. Gewirke können aus nativen oder regenerierten Cellulosefasern oder aus Synthesefasern, z.B. Nadelvliesauslegeware aus 100 % Polyamid 6-Fasern, aus Polyester/Polyamidfasern 50/50 oder solche, die einen Polyesterkern (Unterseite) besitzen und eine Lauffläche aus Polyamid 6-Fasern, Polyamidfasern und Viskose-Zellwolle 50/50, Polyesterfasern und Viskose-Zellwolle 50/50, und Polyesterfasern 100 %ig.

Gute permanente Flammschutzeffekte werden auch auf Fasergut erzielt, das aus 100 % Polypropylenfasern oder auch Polypropylenfasern-Mischgut z.B. mit Polyester- oder Polyamid-oder Cellulosefasern besteht.

Es werden auch sehr gute flammhemmende Effekte erzielt, wenn man die flammhemmenden phosphororganischen Verbindungen mit den vorgenannten Vernetzungsprodukten und Katalysatoren in eine Vorstrichimprägnierflotte bei Tufting-Teppichen oder in eine Rückenappreturflotte für Webteppiche einbaut.

Das Grundgewebe der Tufting-Teppiche kann aus Baumwolle, Jute, Zellwolle, Wolle oder Synthesefasern auf Basis Polyamid, Polyester, Polypropylen oder in Mischung, oder aus Glasfasern bestehen. Vernadelte Vliesstoffe aus Polyester oder Polypropylenfasern eignen sich ebenfalls ausgezeichnet als Grundgewebe. Der getuftete Flor (Schlingen- oder Schnittflor) kann aus Polyamid-, Polyester-, oder aus Polyacrilnitrilfasern bestehen. Mischungen aus Polyacrylnitrilfasern mit z.B. 20 % Polyesterfasern haben sich ebenfalls bewährt.

Zur Griffgestaltung, zur Erzielung einer guten Formbeständigkeit, zur Verbesserung des Abriebs und der Trittfestigkeit von Nadelvliesauslegeware werden den Ausrüstungsflotten hochpolymere Kunststoffdispersionen zugesetzt.

Die Einbindung der Florfäden bei einer Tuftedware in das oben beschriebene Grundwegebe erfolgt durch den sogenannten Vorstrich mit hochpolymeren Kunststoffdispersionen, denen die erfindungsgemäßen flammhemmenden Komponenten, Vernetzer und Katalysatoren zugesetzt werden.

Als Kunststoffdispersionen kommen in Frage Polyvinylacetat, Polyvinylacetat mit Kunststoffweichmachern, wie Dibutylphthalat, Misch-Polymerisate von Vinylacetat mit Maleinsäuredibutylester, Vinylacetat mit Äthylen, Terpolymerisate von Vinylacetat mit Äthylen und Vinylchlorid, Vinylacetat mit Äthylen und Acrylamid, Vinylacetat mit Äthylen und N-Methylolacrylamid, Mischpolymerisate von Acrylsäurebutylester mit N-Methylolacrylamid, Mischpolymerisate von Acrylsäurebutylester, N-Methylolacrylamid und Acrylsäure, Mischpolymerisate von Acrylsäurebutylester, N-Methylolacrylamid und/oder N-Methylolmethacrylamid und Acrylsäure, Mischpolymerisate von Acrylsäurebutylester, Methacrylsäuremethylester und Methylolmethacrylamid, Mischpolymerisate von Acrylsäurebutylester, Acrylnitril, N-Methylolacrylamid und Methacrylsäure, Mischpolymerisate von Acrylsäurebutylester, Acrylnitril, N-Methylolmethacrylamid und Acrylsäure, Mischpolymerisate von Acrylsäurebutylester, Styrol, Acrylnitril und N-Methylolmethacrylamid, Mischpolymerisate aus N-Methylolmethacrylamid und Butandioldiacrylat, Acrylsäuremethylester und Acrylsäurebutylester, Mischpolymerisate von Äthylacrylat, Acrylnitril und N-Methylolacrylamid, Mischpolymerisate von Butylacrylat, Vinylacetat mit N-Methylolacrylamid, Mischpolymerisate von Butylacrylat, Acrylnitril und N-Methylolacrylamid, Mischpolymerisate von Styrol, Butylacrylat und Acrylsäure, Naturlatex oder Syntheselatices aus Styrol mit Butadien.

Bevorzugte Polymerdispersionen sind Polyvinylacetat-Dispersionen (50 %ig), Mischpolymerisate von Vinylacetat mit Maleinsäuredibutylester, z.B. im Verhältnis 77/23, Mischpolymerisate Vinylacetat/Äthylen, z.B. im Verhältnis 84/16 oder 75/25, Mischpolymerisate Vinylacetat/Äthylen/Vinylchlorid z.B. im Verhältnis 51/15/34, Mischpolyermisate Vinylacetat/Äthylen/Acrylamid 80/18/2, Mischpolymerisate Vinylacetat/Äthylen/N-Methylolacrylamid 77/18/5, Mischpolymerisate von Styrol/Butylacrylat/Acrylnitril/Methacrylsäure/Acrylamid z.B. im Verhältnis 16 : 61 25 : 2 : 1 oder 25 : 53 : 25 : 2 : 1, Mischpolymerisate von Äthylacrylat/Acrylnitril/N-Methylacrylamid 6 : 3 : 1, Mischpolymerisate von Butylacrylat/Vinylacetat/N-Methylolacrylamid wie 50 % Polyvinylalkohol, 25 % Polyvinylacetat, 25 % Polyäthylen oder Butadien-Styrol-Latex (ca. 50 %) z.B. im Verhältnis 40 : 60 oder 35 : 60 + 3,5 Acrylsäure.

Derartige Kunststoffdispersionen werden auch als Rückenappretur bei Webteppichen für die griffgebende Verfestigung des Teppichs benutzt.

Bei Tufted-Teppichen erfolgt im allgemeinen anschließend noch eine Rückenbeschichtung mit Naturlatex, Syntheselatex-Dispersion z.B. auf Basis Butadien-Styrol 40 : 60 oder 60 : 40 oder 35 : 60 + 3,5 Acrylsäure oder Polyurethane verschiedener Zusammensetzung.

Die Ausrüstungsflotten, sowohl für den Vorstrich als auch für die Rückenbeschichtung bei Webteppichen, enthalten außerdem noch Verdicker. Der Verdicker hat bekanntlich den Zweck, die Appreturen physikalisch in einen Zustand zu versetzen, der es erlaubt, daß die Imprägnierflotten bei der Applikation nicht in die Polfäden durchschlagen und diese verkleben. Als Verdickungsmittel sind geeignet wasserlösliche Hydroxyäthylcellulosen, Methylcellulosen, Carboxylmethylcellulosen, wasserlösliche Stärkeprodukte, teilveretherte oder veretherte Stärkeprodukte, Polyvinylalkohole, die Natrium- oder Ammoniumsalze der Alginsäure.

Der Vorstrich oder auch die Teppichrückenbeschichtung für Webteppiche kann außerdem wie üblich mit Kreide gefüllt werden.

Die Durchführung der erfindungsgemäßen Verfahren zur flammhemmenden Ausrüstung von Geweben, Gewirken, Non-wovenfabrics und Tufting- oder Webteppichen erfolgt unter Applikationsbedingungen, wie sie in der Textilindustrie üblich sind. Ein zusätzlicher Arbeitsgang ist nicht nötig.

Die Applikation der flammhemmenden Ausrüstungsflotten kann durch eine Foulardbehandlung, durch Rakeln oder Pflatschen erfolgen. Sie hängt vom Textilgut ab. Gewebe oder Gewirke werden im allgemeinen einer Foulardbehandlung unterworfen. Nadelvliese können sowohl am Foulard als auch mittels Rakel- oder Pflatschausrüstung behandelt werden.

Die Vorstrichimprägnierflotte oder die Rückenappretur für Webteppiche wird mit Hilfe einer Luftrakel, einer Gummituchrakel oder Zylinderrakel aufgebracht.

Anschließend wird getrocknet bzw. kondensiert. Die Baumwollgewebe werden zunächst einer Vortrocknung bei 80-120 °C unterworfen und anschließend 4-5 Minuten bei 140-160 °C getrocknet. Nadelvlies bzw. Tufting- oder Webteppiche werden bei 130-150 °C getrocknet.

Den Ausrüstungsflotten können weitere Veredlungsmittel wie textile Weichmacher, Hydrophobierungsprodukte, Oleophobierungsmittel oder auch antimikrobielle Ausrüstungsprodukte zugesetzt werden.

## Herstellungsbeispiele

Vorbemerkungen :

2-Methyl-2-oxo-oxa-phospholan

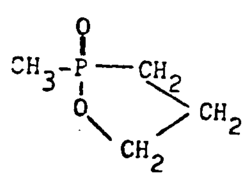

(abgekürzt MOP) führt im $^1$H-rauschentkoppelten 40,5 MHz 31-P-NMR-Spektrum zu einem charakteristischen Signal bei -71 ppm, bezogen auf Trimethylphosphit als internen Standard (Lösungsmittel $CDCl_3$). Die in den Beispielen beschriebenen Umsetzungsprodukte zeigen alle dieses Signal nicht mehr oder allenfalls in einer zu vernachlässigenden Intensität von maximal ca. 3 %. Die angegebenen Hydrolysezahlen wurden nicht wie gewöhnlich mit Phenolphthalein als Indikator, also bei einem pH-Wert von ca. 9,3-9,4, sondern potentiometrisch bei einem pH-Wert von 8,0 ermittelt. Dies war notwendig, da die Reaktionsprodukte im alkalischen Bereich z.T. hydrolysieren bzw. alkoholysenanfällig sind und dadurch gebf. viel zu niedere Hydrolysezahlen vorgetäuscht werden.

In allen Fällen wurde zum Ausschluß von Wasser und Luft Stickstoff übergeleitet.

Beispiel 1 : (n = 1, m = 2)

In 26,8 g (0,1 Mol) Oleylalkohol werden bei 60 °C 0,24 g (0,001 Mol) Natriumhydrid und etwas Thymolphthalein als Indikator eingetragen. Es wird 60 Minuten gerührt. Dann werden bei 20 °C innerhalb von 10 Minuten unter Kühlung 24 g (0,2 Mol) MOP zugetropft und 1 Std. nachgerührt. Dabei entfärbt sich die ursprünglich blaue Lösung. Es resultiert ein schwach gelbliches Öl, das mit heißem und kaltem Wasser eine trübe Lösung bildet.

Ausbeute : 51 g ; $n_D^{20}$ = 1,477 9 ;
Hydroxylzahl (OHZ) = 92 ; P = 12,1 %.

Beispiel 2 : (n = 1, m = 4)

Zu einer Mischung aus 13,4 g (0,05 Mol) Oleylalkohol, etwas Thymolphthalein und 24 g (0,2 Mol) MOP wird bei 0-20 °C unter Kühlung innerhalb von 15 Min. 1 g einer 33 %igen Natriummethylat-Lösung in Methanol zugetropft. Die ursprünglich blaue Lösung entfärbt sich beim Nachrühren. Ausbeute = ca. 38 g :

Das schwach gelbliche Öl hat eine OHZ von 79. $n_D^{20}$ = 1,476 6 ; P = 15,7 %.

Beispiel 3 : (n =1, m = 8)

13,4 g (0,05 Mol) Oleylalkohol, etwas Thymolphthalein-Indikator und 1 g einer 33 %igen Natriummethylat-Lösung in Methanol werden gemischt und bei Raumtemperatur und einem Vakuum von 2,3 mbar das Methanol abgezogen. Dann werden unter Eiskühlung 68,0 g (0,4 Mol) MOP innerhalb von 30 Minuten zugetropft und dabei zur Aufrechterhaltung der Blaufärbung noch weitere 1,8 g der Natriummethylat-Lösung zugetropft. Es resultierten 63,5 g eines zunächst noch blau gefärbten Öls, das sich nach 2 Std. Stehen bei Raumtemperatur von selbst entfärbt und sich in Wasser klar löst. Die Lösung zeigt beim Schütteln eine intensive Schaumbildung. $n_D^{20}$ = 1,492 0 ; OHZ = 53 ; P = 19,5 %.

Beispiel 4 : (n = 1, m = 10)

Zu 18,2 g (0,05 Mol) Tetrahydro-perfluor-octanol kommen bei Raumtemperatur etwas Thymolphthalein und 60 g (0,5 Mol) MOP. Bei 30 °C werden innerhalb von 15 Min. 2,8 g einer 33 %igen Lösung von Natriummethylat in Methanol zugetropft. Dabei steigt die Temperatur bis auf 42 °C. Die Lösung entfärbt sich nach 30 Min. Nachrühren. Das farblose Öl (81 g) ist in Wasser völlig klar löslich. Die Lösung schäumt beim Schütteln intensiv. $n_D^{20}$ = 1,461 8 ; OHZ = 20 ; P = 19,1 %.

Beispiel 5 : (n = 1, m = 2)

12,2 g (0,1 Mol) 2-Phenyl-äthanol, etwas Thymolphthalein werden bei 40 °C 1 Std. lang mit 0,24 g (0,01 Mol) Natriumhydrid verrührt. Anschließend werden bei 5-10 °C 24 g (0,2 Mol) MOP innerhalb von 5 Min. eingerührt. Die Temperatur steigt dabei auf 50 °C an. Ausbeute : 37 g. Die blaue Lösung entfärbt sich nach ca. 30 Min. Das farblose Öl gibt nach dem Verdünnen mit Wasser bei 50 °C eine trübe Lösung. $n_D^{20}$ = 1,515 2 ; OHZ = 128 ; P = 16,7 %.

Beispiel 6 : (n = 1, m = 3)

Zur Mischung aus 6,4 g (0,2 Mol) Methanol, etwas Thymolphthalein und 72 g (0,6 Mol) MOP werden 2,7 g einer 33 %igen Natriummethylät-Lösung in Methanol bei 10 °C innerhalb von 12 Min. zugetropft. Die Blaufärbung des Indikators verschwindet beim Nachrühren. Ausbeute 81 g. $n_D^{20}$ = 1,479 2 ; OHZ = 154 ; P = 22,7 %.

Beispiel 7 : (n = 2, m = 2)

15,5 g (0,25 Mol) Äthylenglykol, etwas Thymolphthalein und 3 g einer 33 %igen Natriummethylat-Lösung in Methanol werden bei 20 °C gemischt und bei 4 mbar das Methanol abgezogen. Dann werden unter Kühlung innerhalb von 15 Min. 120 g (1 Mol) MOP zugetropft. Die blaue Lösung entfärbt sich nach 1 Std. Nachrühren. Ausbeute 138 g. OHZ = 183 ; $n_D^{20}$ = 1,4956 ; P = 22,5 %.

Beispiel 8 : (n = 3, m = 1)

27,6 g (0,3 Mol) wasserfreies Glyzerin, etwas Thymolphthaleinindikator und 1,44 g (0,06 Mol) Natriumhydrid werden 60 Min. auf 50 °C erhitzt. Dann werden bei 10 °C unter Eiskühlung und intensivem Rühren in 30 Sek. 108 g (0,9 Mol) MOP zugegeben. Dabei steigt die Temperatur trotz der Kühlung bis auf 56 °C an. Nach 30 Min. Nachrühren bei 30 °C entfärbt sich die Lösung. Ausbeute 137 g. Die Daten der farblosen Öle sind : $n_D^{20}$ = 1,476 2 ; OHZ = 305 ; P = 20,2 %.

Beispiel 9 : (n = 3, m = 3,6)

Zu 5,1 g (0,055 Mol) wasserfreiem Glyzerin kommen 2,5 g einer 33 %igen Natriummethylat-Lösung in Methanol. Bei Raumtemperatur wird bei 4 mbar das Methanol abgezogen. Anschließend werden bei 40 °C 72 g (0,6 Mol) MOP innerhalb von 20 Min. unter Kühlung zugetropft. Ausbeute an farblosem Öl : 79 g. OHZ = 56 ; P = 23,8 %.

Beispiel 10 : (n = 4, m = 2)

Die Mischung aus 17,0 g (0,125 Mol) Pentaerythrit, etwas Thymolphthalein und 120 g (1 Mol) MOP wird solange auf 50 °C erhitzt bis eine klare Lösung vorliegt. Bei 30 °C werden unter Kühlung innerhalb von 30 Min. 5 g einer 33 %igen Natriummethylat-Lösung im Methanol zugetropft. Die Lösung bleibt dabei intensiv blau. Es wird 1 Std. lang nachgerührt. Dabei entfärbt sich die Lösung. Nach dem Abkühlen resultiert ein viskoses Öl. $n_D^{20}$ = 1,503 3 ; OHZ = 157 ; P 21,7 % ; Ausbeute = 142 g.

Beispiel 11 : (n = 2, m = 2)

17,6 g (0,2 Mol) 1,4-Butendiol und etwas Thymolphthalein werden 50 Min. bei 50 °C mit 0,96 g (0,04 Mol) Natriumhydrid verrührt. Dann werden 96 g (0,8 Mol) MOP zu der tiefblauen Lösung innerhalb von 50 Min. bei 25-30 °C unter Kühlung zugetropft. Beim Nachrühren bei 20 °C entfärbt sich das Reaktionsgemisch. Das resultierende schwach gelb gefärbte Öl zeigt einen Brechungsindex von $N_D^{20}$ = 1,500 2 ; OHZ = 163 ; P = 21,4 % ; Ausbeute = 114,5 g.

Beispiel 12 : (n = 3, m = 2)

Zu 16,5 g (0,111 Mol) Triäthanolamin und etwas Thymolphthalein werden bei 10 °C unter Kühlung 89,3 g (0,666 Mol) von 2-Methyl-, 2-oxo-, 4-methyl-, oxa-phospholan

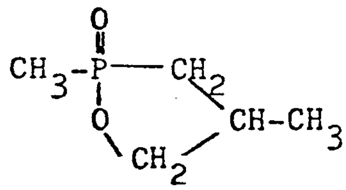

zugegeben. Dabei tritt noch keine nennenswerte Reaktionswärme auf. Dies ist jedoch der Fall beim Zutropfen von insgesamt 4 g einer 33 %igen Natrium methylat-Lösung in Methanol innerhalb von 20 Min. Die blaue Lösung entfärbt sich beim Nachrühren. Ausbeute an farblosem Öl = 110 g. $n_D^{20}$ = 1,483 8 ; P = 18,7 % ; OHZ = 136.

Beispiel 13 : (n = 1, m = 2)

Zu 24,4 g (0,4 Mol) Mono-äthanolamin und etwas Thymolphthalein kommen bei 20 °C in 5 Min. 96 g (0,8 Mol) MOP und dann bei 20-30 °C unter Kühlung innerhalb von 20 Min. 3 g einer 33 %igen Lösung von Natriummethylat in Methanol. Es resultieren nach 1 stündigem Nachrühren bei 20 °C 123,4 g eines farblosen Öls vom brechungsindex $n_D^{20}$ = 1,491 5. OHZ = 167 ; Gesamt-N = 4,5 % ; Basen-N = 4,5 % ; P = 19,9 %.

Beispiel 14 : (n = 1, m = 1)

Zu 52,5 g (0,5 Mol) 2-Hydroxyäthyl-carbamat, etwas Thymolphthalein und 60 g (0,5 Mol) MOP kommen bei 0-5 °C unter intensiver Eiskühlung innerhalb von 25 Min. 5 g einer 33 %igen Lösung von Natriummethylat in Methanol. Es resultieren nach 2 stündigem Nachrühren 117,5 g eines farblosen Öls. $n_D^{20}$ = 1,481 5 ; OHZ = 269 ; P = 13,0 %.

Beispiel 15 : (n = 1, m = 2)

Es wird verfahren analog Beispiel 14, unter Verwendung von nur 26,3 g (0,25 Mol) 2-Hydroxyäthyl-carbamat. Es resultieren 91 g eines farblosen Öls. $n_D^{20}$ = 1,4863 ; OHZ = 181 ; P = 16,9 %.

Beispiel 16 : (n = 1, m = 1)

52 g (0,5 Mol) 2-Hydroxyäthyl-harnstoff und etwas Thymolphthalein werden bei 75 °C in 50 g Dimethylformamid gelöst. Dann werden bei 30 °C 0,72 g (0,03 Mol) Natriumhydrid eingetragen und 2 Std. bei 30 °C gehalten bis das Natriumhydrid gelöst ist. Anschließend werden bei 10-15 °C unter Kühlung innerhalb von 5 Min 60 g (0,5 Mol) MOP zugefügt. Die Lösung bleibt dabei blau. Bei 4 mbar wird anschließend bei 100 °C das Dimethylformamid abdestilliert. Es hinterbleiben 111 g eines zähen Öls. $n_D^{20}$ = 1,503 2 ; OHZ = 219 ; P = 13,5 %.

## Verwendungs-Beispiele

### Beispiel 1

Eine Nadelvliesauslegeware mit einem Quadratmetergewicht von ca. 780 g, bestehend aus einem feinfädigen Polyesterfaserkern und aus einer grobfädigen Polyamidlauffläche im Mischungsverhältnis von 65 : 35, wird auf einem Zweiwalzenfoulard mit einer wäßrigen Imprägnierlösung folgender Zusammensetzung behandelt :

200 g/l eines analog Herstellungs-Beispiel 9 synthetisierten Umsetzungsproduktes aus 1 Mol Glyzerin und 10,8 Molen 2-Methyl-2-oxo-oxaphospholan (P = 23,8 %)
100 g/l eines 80 %igen Trimethylolmelamintrimethyläthers
300 g/l einer 50 %igen Polymerdispersion, bestehend aus Vinylacetat/Äthylen im Verhältnis 84 : 16
5 g/l Ammoniumchlorid

Der Abquetscheffekt beträgt 100 %. Anschließend werden 20 Minuten bei 140 °C getrocknet.

Der Nadelfliz besitzt sehr gute flammhemmende Eigenschaften, die auch nach 5 Shampoonierungen oder nach mehreren Feinwäschen bei 40°-50 °C nicht verlorengehen.

Das Brennverhalten wird nach DIN 54 332, « Bestimmung des Brennverhaltens von textilen Fußbodenbelägen » und nach DIN 54 333, « Bestimmung der Flammausbreitungsgeschwindigkeit auf Textilien » geprüft.

Wird der Prüfling nur mit 300 g/l der im Beispiel erwähnten Mischpolymerdispersion ausgerüstet, so brennt er nach DIN 54 332 nach Wegnahme der Prüfflamme (15 Sek. Einwirkungszeit) weiter, dasselbe gilt bei der Prüfung nach DIN 54 333. Nach Wegnahme der Prüfflamme (15 Sek. Einwirkungszeit) brennt der Prüfling in breiter Front weiter. Die Flammenfront durchläuft in einer Zeit von 2 Minuten und 54 Sek. die Prüfstrecke von 10 cm.

Das mit der oben aufgeführten Imprägnierflotte behandelte Textilgut brennt dagegen bei Wegnahme der Prüfflamme sowohl nach DIN 54 332 als auch nach DIN 54 333 nicht weiter. Die Flammeneinwirkungszeit nach DIN 54 332 wird bei der Prüfung von 15 auf 30 und 60 Sekunden erhöht. Auch nach so langen Flammeneinwirkungszeiten brennen die Prüflinge nach Wegnahme der Flamme nicht weiter.

Nach 2 bzw. 5 Shampoonierungen wird weder nach DIN 54 332 noch nach DIN 54 333 ein Nachbrennen bzw. Abbrennen beobachtet. Dasselbe Bild ergab sich nach 3 Feinwäschen mit 2 g/l eines handelsüblichen Feinwaschmittels (Waschdauer jeweils 15 Minuten bei 40 °C). Die Prüflinge brennen nicht weiter. Es wird nach DIN 54 333 lediglich eine Nachflammzeit von 30 Sekunden festgestellt.

Der erfindungsgemäß ausgerüstete Nadelfilz hat sehr gute elastische Eigenschaften und zeigt ein gutes Abrollvermögen.

Anstelle der 50 %igen Polymerdispersion Vinylacetat/Äthylen (84 : 16) kann auch eine 40 %ige Mischpolymerdispersion, bestehend aus Äthylacetat/Acrylnitril/N-Methylolacrylamid (6 : 3 : 1) verwendet werden. Die flammhemmenden Prüfungen zeigen ein ähnliches Bild.

### Beispiel 2

Eine 700 g/m² schwere Nadelvliesauslegeware, die aus einem feinfädigen Polypropylenkern und ca. 30 % Polyamidfaseranteil und einer grobfädigen Polypropylenfaser-Lauffläche besteht, wird auf einem Zweiwalzenfoulard mit der wäßrigen Imprägnierlösung behandelt, die im Beispiel 1 beschrieben ist.

Der Abquetscheffekt beträgt ca. 100 %. Anschließend wird 30 Minuten bei 130 °C getrocknet.

Die Nadelvliesauslegeware besitzt ebenfalls sehr gute permanente flammhemmende Eigenschaften nach DIN 54 332 und DIN 54 333.

Nach Wegnahme der Prüfflamme brennt das Nadelvlies nicht weiter, während das Nadelvlies, das nur mit 300 g/l einer 50 %igen Polymerdispersion Vinylacetat/Äthylen (84 : 16) behandelt wurde nach DIN 54 333 in 2 Minuten und 20 Sekunden abbrennt.

Die so ausgerüstete Nadelvliesauslegeware ist elastisch und zeigt einen trockenen Griff.

### Beispiel 3

Eine Tufting-Teppichauslegeware, 600 g/m², mit einem PA-Flor, geschnitten, 6 mm hoch, auf einem Trägermaterial aus vernadeltem Polypropylenvlies wird mit folgender Vorstricht-Imprägnierlösung behandelt :

150 Teile eines Umsetzungsproduktes von 1 Mol Glycerin + 10,8 Molen 3-Methyl-2-oxo-oxaphospholan (P = 23,9 %)
75 Teile eines 80 %igen Trimethylolmelamintrimethyläthers
150 Teile einer 50 %igen Butadien-Styrol-Dispersion (60 : 40)
280 Teile Kreide
325 Teile einer 2 %igen Methyl-hydroxyäthylcelluloselösung

5 Teile Ammoniumchlorid

Der Vorstrich wird mit Hilfe einer Handrakel aufgebracht und 20 Minuten bei 140 °C getrocknet. Die Trockenauflage beträgt ca. 600 g/m$^2$.

Die Florfäden sind im Grundgewebe sehr gut verfestigt und zeigen ihre ursprüngliche Beweglichkeit, da die Imprägnierlösung für den Vorstrich nicht in den Flor eingedrungen ist. Der falmmhemmend ausgerüstete Tufted-Teppich ist für die Auslegung von Innenräumen wie Kofferräume für Personenautos bestimmt. Er zeigt einen flexiblen und angenehmen Griff.

Die flammhemmenden Eigenschaften des ausgerüsteten Tuftedteppichs werden nach DIN 54 333 geprüft. Im Vergleich hierzu wird ein Abschnitt der oben beschriebenen Tuftedware mit einem Vorstrich auf der Handrakel behandelt, der keine flammhemmenden Komponenten enthält. Die Einbindung der Florfäden erfolgt wieder mit einer 50 %igen Butadien-Styrol-Dispersion (60 : 40) unter Zusatz von Kreide und Methyl-hydroxyläthylcelluloselösung als Verdicker. Der nicht flammhemmend ausgerüstete Teppich brennt nach der Wegnahme der Prüfflamme ab. Der flammhemmend ausgerüstete Teppichprüfling zeigt nach Wegnahme der Prüfflamme kein Weiter- oder Nachbrennen.

Der sehr gute flammhemmende Effekt bleibt auch nach 3 Shampoonierung voll erhalten.

## Beispiel 4

Gleich gute flammhemmende Effekte werden erhalten, wenn man anstelle von 150 Teilen einer 50 %igen Butadien-Styrol-Dispersion (60 : 40) als Polymerdispersion eine 50 %ige Co-Polymerdispersion, bestehend aus Vinylacetat/Äthylen (84 : 16) in die Ausrüstungsflotte wie Beispiel 3 beschrieben, einsetzt.

Die Florfäden werden ebenfalls im Grundgewebe sehr gut verfestigt. Der flammhemmende Effekt, gemessen nach DIN 54 333, ist ausgezeichnet und bleibt auch nach 4 Shampoonierungen erhalten.

## Beispiel 5

Die im Beispiel 1 beschriebene Nadelvliesauslegeware wird auf einem Zweiwalzenfoulard mit folgender flammhemmender Ausrüstungsflotte behandelt :

240 g/l eines gemäß Herstellungs-Beispiel 3 synthetisierten Umsetzungsproduktes von 1 Mol Oleylalkohol + 8 Mole 2-Methyl-2-oxo-oxaphospholan (P = 19,5 %)
120 g/l eines 80 %igen Trimethylolmelamintrimethyläthers
300 g/l einer 40 %igen Polymerdispersion, bestehend aus Äthylacrylat/Acrylnitril/N-Methylolacrylamid (6 : 3 : 1)
45 g/l Ammoniumchlorid.

Der Abquetscheffekt beträgt ca. 85 %. Im Anschluß wird 25 Minuten bei 145 °C getrocknet.

Die Nadelvliesauslegeware besitzt sehr gute flammhemmende Eigenschaften. Der Warengriff ist elastisch und trocken.

## Beispiel 6

Die Nadelvliesauslegeware, die im Beispiel 2 Verwendung findet, wird auf einem Zweiwalzenfoulard mit nachstehender Imprägnierlösung behandelt :

200 g/l eines Umsetzungsproduktes aus 1 Mol Glykol mit 4 Molen 2-Methyl-2oxo-oxaphospholan (P = 22,5 %)
100 g/l eines 80 %igen Trimethylolmelamintrimethyläthers
250 g/l einer 40 %igen Polymerdispersion, bestehend aus Äthylacrylat/Acrylnitril/N-Methylolacrylamid (6 : 3 : 1)
5 g/l Ammoniumchlorid.

Der Abquetscheffekt beträgt ca. 100 %. Getrocknet wird 20 Min. bei 130 °C.

Es resultiert eine sehr gut flammhemmende Nadelvliesauslegeware mit einem trockenen Griff und einer sehr guten Elastizität.

Die flammhemmenden Eigenschaften wurden nach DIN 54 333 geprüft. Nach Wegnahme der Prüfflamme brannte der Prüfling nicht weiter. Dieser sehr gute flammhemmende Effekt blieb auch noch nach 3 Shampoonierungen erhalten, es wurde lediglich ein Nachflammen von 15 Sekunden festgestellt.

## Beispiel 7

Mit einer Imprägnierlösung folgender Zusammensetzung wird die im Beispiel 1 beschriebene Nadelvliesauslegeware ausgerüstet :

250 g/l eines gemäß Herstellungs-Beispiel 12 synthetisierten Umsetzungsproduktes von 1 Mol

Triäthanolamin mit 6 Molen 2,4-Dimethyl-2-oxo-oxaphospholan (P = 18,7 %)
180 g/l eines 80 %igen Trimethylolmelamintrimethyläthers
250 g/l einer 50 %igen Polymerdispersion, bestehend aus Vinylacetat und Äthylen im Verhältnis 84 : 16
5 g/l Ammoniumchlorid.

Die Durchführung der Ausrüstung ist im Beispiel 1 beschrieben. Die Nadelvliesauslegeware zeigt gute flammhemmende Eigenschaften.

Beispiel 8

Eine Nadelvliesauslegeware mit einem Quadratmetergewicht von ca. 700 g, bestehend aus einem feinfädigen Polypropylenkern und einer grobfädigeren Polypropylenfaser-Lauffläche, wird auf einem Zweiwalzenfoulard mit einer wäßrigen Imprägnierlösung behandelt, die folgende Zusammensetzung hat :

200 g/l eines gemäß Herstellungs-Beispiel 10 synthetisierten Umsetzungsproduktes aus 1 Mol Pentaerythrit mit 8 Molen 2-Methyl-2-oxo-oxaphospholan (P = 21,7 %)
100 g/l eines 80 %igen Trimethylolmelamintrimethyläthers
300 g/l einer 50 %igen Polymerdispersion aus Butadien/Styrol (60 : 40)
5 g/l Ammoniumchlorid.

Der Abquetscheffekt beträgt. ca. 100 %. Anschließend erfolgt eine Trocknung 20 Minuten bei 135 °C.
Die Nadelvliesauslegeware besitzt sehr gute Flammhemmende Eigenschaften, die mehrere Shampoonierungen bzw. Naßwäschen bei 40 °C überstehen.
Das Brennverhalten wird nach DIN 54 333, « Bestimmung der Flammausbreitungsgeschwindigkeit auf Textilien » bestimmt. Die Nadelvliesauslegeware, die nur mit 300 g/l der 50 %igen Polymerdispersion aus Butadien/Styrol (60 : 40) ausgerüstet ist, brennt nach Wegnahme der Prüfflamme (15 Sekunden Einwirkungszeit) in breiter Front weiter. 10 cm der Prüfstrecke brennen in 2 Minuten und 30 Sekunden ab. Der flammhemmend ausgerüstete Nadelfilz brennt nach Entfernen der Prüfflamme nicht weiter, die Flamme erlischt nach 6 Sekunden.

Beispiel 9

Der in Beispiel 1 beschriebene Nadelfilz wird mit nachstehender Imprägnierflotte ausgerüstet :

230 g/l eines gemäß Herstellungs-Beispiel 4 synthetisierten Umsetzungsproduktes aus 1 Mol eines Perfluoralkyläthanols ($C_6F_{13}$-$C_2H_4$-OH) + 10 Mol 2-Methyl-2-oxo-oxaphospholan (P = 19,1 %)
100 g/l eines 80 %igen Trimethylolmelamintrimethyläthers
400 g/l einer 50 %igen Polymerdispersion, bestehend aus Vinylacetat/Äthylen (84 : 16)
4,5 g/l Ammoniumchlorid
Die Behandlung erfolgt am Zweiwalzenfoulard, Abquetscheffekt ca. 110 %. Getrocknet wird 25 Minuten bei 135 °C.
Der Nadelfilz besitzt sehr gute flammhemmende Eigenschaften. Der Warengriff ist elastisch.

Beispiel 10

Eine Textiltapete, die aus 75 % Glasfasern und aus 25 % Polyesterfasern besteht, wird mit einer Imprägnierlösung wie in Beispiel 1 beschrieben, behandelt. Die Imprägnierlösung wird über eine Stahlwalze abgezogen. Als Gegenwalze dient eine Gummiwalze, die außerdem mit einer Baumwollmaschenware (Bombage) umwickelt ist. Die Flottenaufnahme beträgt ca. 135 %. Nach einer Trocknung, 20 Minuten bei 145 °C, erhält man eine ausgezeichnete schiebefeste und flammfeste Textiltapete.

Beispiel 11

Eine Tufting-Auslegeware, deren Zusammensetzung und Aufbau im Beispiel 3 beschrieben sind, wird mit folgender Vorstrichimprägnierflotte behandelt :

150 Teile eines gemäß Herstellungs-Beispiel 11 synthetisierten Umsetzungsproduktes aus 1 Mol Butendiol + 4 Molen 2-Methyl-2oxo-oxaphospholan (P = 21,4 %)
75 Teile eines 80 %igen Trimethylolmelamintrimethyläthers
200 Teile einer 50 %igen Vinylacetat/Äthylen-Dispersion (84 : 16)
280 Teile Kreide
300 Teile einer 2,5 %igen Methyl-hydroxyÄthylcelluloselösung
5 Teile Ammoniumchlorid
Der Vorstrich wird mit einer Handrakel aufgebracht und 25 Minuten bei 135 °C getrocknet. Die

Trockenauflage beträgt ca. 650 g/m$^2$.

Die Tufting-Auslegeware zeigt einen flexiblen, elastischen Griff. Die Florfäden sind im Grundgewebe gut verfestigt. Die Imprägnierlösung ist nicht in den Flor eingedrungen. Die Tufting-Auslegeware hat sehr gute flammhemmende Eigenschaften, die mehrere Shampoonierungen übersteht.

**Ansprüche** (für die Vertragsstaaten : BE, CH, DE, FR, GB, IT, NL.)

1. Organische Phosphor-Verbindungen mit 3-Hydroxyalkylphosphinsäureestergruppen der Allgemeinen Formel I

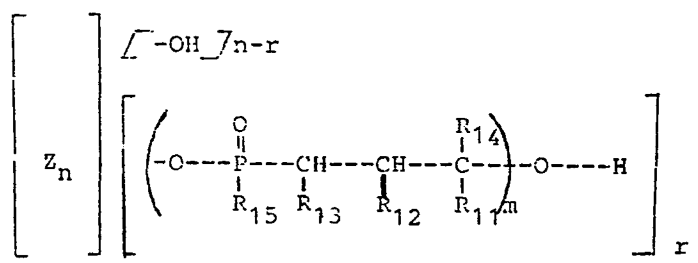

(I)

wobei die einzelnen Symbole in der obigen Formel I folgende Bedeutung haben :

n ist eine ganze Zahl von 1 bis 6, vorzugsweise 1 bis 4 ;

r ist eine ganze Zahl von 1 bis 6, vorzugsweise die gleiche Zahl wie n ;

m ist 1, wenn $r < n$ ist oder eine Zahl von 1 bis 150, bevorzugt 2 bis 10, wenn $r = n$ ist ;

$R_{11}$, $R_{12}$, $R_{13}$, $R_{14}$ sind gleiche oder verschiedene gegebenenfalls ungesättigte und/oder verzweigte Alkylreste mit 1 bis 4 Kohlenstoffatomen oder bevorzugt Wasserstoff ;

$R_{15}$ hat die gleiche Bedeutung wie $R_{11}$ außer Wasserstoff, bevorzugt $(C_1$-$C_3$-)Alkyl, besonders bevorzugt Methyl ;

$Z_n$ ist ein n-wertiger Rest aus der Gruppe geradkettiger oder verzweigter aliphatischer oder araliphatischer Kohlenwasserstoffreste mit 1 bis 22, vorzugsweise 1 bis 8 C-Atomen, die gegebenenfalls durch bis zu 2 -S- und/oder $NR_1$-Reste mit $R_1 = (C_1$-$C_4$-)Alkyl, insbesondere Methyl, unterbrochen und/oder durch Fluor, Chlor, Brom-Atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können ; oder ein äthergruppenhaltiger Kohlenwasserstoffrest mit Äquivalent-Gewichten bis zu 8 000, bevorzugt bis zu 4 000, die sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 bis 22, vorzugsweise 1 bis 10, C-Atomen ergeben, wobei die araliphatischen bzw. die aromatischen Reste sich von Benzol, Alkyl- bzw. Alkylenbensolen mit bis 18 C-Atomen, Naphthalin, Diphenyl, Diphenylmethan, Diphenyläthan oder 2,2-Diphenylpropan ableiten, und gegebenenfalls im Kern durch 1 oder 2 Methoxy- bzw. Äthoxygruppen bzw. im Kern und/oder in den Seitenketten durch F-, Cl-, Br-Atome, vorzugsweise bis fünfmal substituiert sein können ; oder ein phosphorhaltiger Rest der allgemeinen Formel

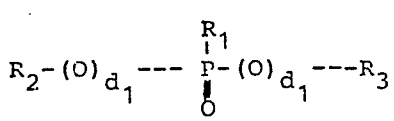

$Z_{n,1}$

in dem

$d_1$, unabhängig voneinander 0 und 1 und

$R_1$ Alkyl-, Hydroxyalkyl-, gegebenenfalls $(C_1$-$C_2)$-alkyliertes bzw. -dialkyliertes Aminoalkyl, Halogen-(vorzugsweise Cl-)alkyl mit 1 bis 3 C-Atomen, Alkenyl mit oder 3 C-Atomen oder Phenyl, das gegebenenfalls durch 1 oder 2 Halogenatome, vorzugsweise Cl, Br substituiert sein kann, sind und

$R_2$, $R_3$ das gleich wie $R_1$ bedeuten mit der Einschränkung, daß mindestens einer der Reste $R_2$ oder $R_3$ ein Alkylenrest mit 2-5 C-Atomen ist ;

oder ein phosphorhaltiger Rest der Formel :

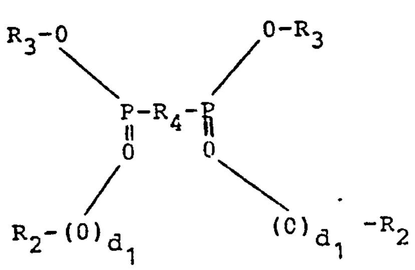

$Z_{n,2}$

in dem $d_1$, $R_2$, $R_3$ Bedeutungen wie in $Z_{n,1}$ haben und $R_4$ einen geradkettigen oder verzweigten ($C_1$-$C_{10}$-) Alkylen-, Phenylen-, Xylylen-Rest oder einen Rest

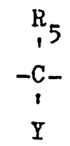

mit Y = OH, $NH_2$ und $R_5$ ($C_1$-$C_3$-)Alkyl bedeuten ; oder ein phosphorhaltiger Rest der allgemeinen Formel

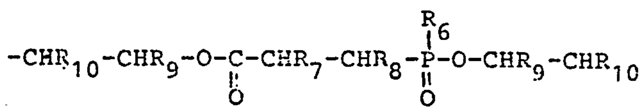

$Z_{n,3}$

in dem

$R_6$ eine ($C_1$-$C_4$)-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkylengruppe mit bis zu 4 C-Atomen, insbesondere Vinyl und Allyl, eine Phenyl oder Benzylgruppe, die gegebenenfalls durch Halogen, vorzugsweise Chlor und/oder Brom, substituiert, vorzugsweise 1- bis 3-mal substituiert sein kann,

$R_7$ Wasserstoff oder eine ($C_1$-$C_4$)-Alkylgruppe, bevorzugt Methyl,

$R_8$ Wasserstoff oder eine ($C_1$-$C_2$)-Alkylgruppe, bevorzugt Methyl, wobei mindestens einer der Reste $R_7$, $R_8$ Wasserstoff ist,

$R_9$ Wasserstoff, Methyl, Chlormethyl,

$R_{10}$ Wasserstoff, Methyl oder Äthyl, vorzugsweise Wasserstoff bedeuten.

2. Verfahren zur herstellung der Phosphor-Verbindungen gemäß Anspruch 1, dadurch gekennzeichnet, daß man 1 Mol einer Verbindung der allgemeinen Formel II

$$Z_n\,(OH)_n \qquad (II)$$

mit 1 bis n.25 Molen von in 2-Stellung substituierten 2-Oxo-oxa-phospholanen der allgemeinen Formel III

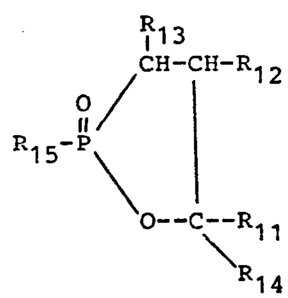

(III)

umsetzt, wobei n, $R_{11}$, $R_{12}$, $R_{13}$, $R_{14}$ und $R_{15}$ und $Z_n$ die oben angegebenen Bedeutungen haben.

3. Verwendung der Phosphor-Verbindungen gemäß Anspruch 1 als Flammhemmittel für Textilmaterial.

**Ansprüche** (für den Vertragsstaat AT)

1. Verfahren zur Herstellung von organischen Phosphor-Verbindungen mit 3-Hydroxyalkylphosphinsäureestergruppen der allgemeinen Formel I

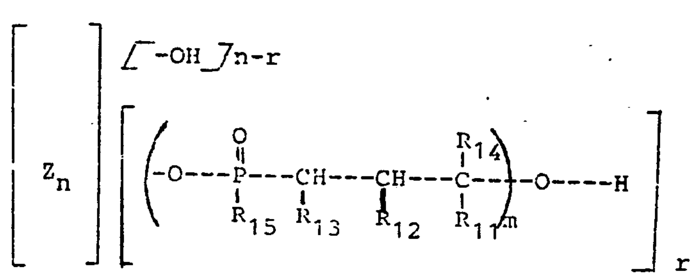

(I)

wobei die einzelnen Symbole in der obigen Formel I folgende Bedeutung haben :

n ist eine ganze Zahl von 1 bis 6, vorzugsweise 1 bis 4 ;

r ist eine ganze Zahl von 1 bis 6, vorzugsweise die gleiche Zahl wie n ;

m ist 1, wenn r < n ist oder eine Zahl von 1 bis 150, bevorzugt 2 bis 10, wenn r = n ist ;

$R_{11}$, $R_{12}$, $R_{13}$, $R_{14}$ sind gleiche oder verschiedene gegebenenfalls ungesättigte und/oder verzweigte Alkylreste mit 1 bis 4 Kohlenstoffatomen oder bevorzugt Wasserstoff ;

$R_{15}$ hat die gleiche Bedeutung wie $R_{11}$ außer Wasserstoff, bevorzugt ($C_1$-$C_3$-)Alkyl, besonders bevorzugt Methyl ;

$Z_n$ ist ein n-wertiger Rest aus der Gruppe geradkettiger oder verzweigter aliphatischer oder araliphatischer Kohlenwasserstoffreste mit 1 bis 22, vorzugsweise 1 bis 8 C-Atomen, die gegebenenfalls durch bis zu 2 -S- und/oder NR-Reste mit mit R = ($C_1$-$C_4$-)Alkyl, insbesondere Methyl, unterbrochen und/oder durch Fluor, Chlor, Brom-Atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können ; oder ein äthergruppenhaltiger Kohlenwasserstoffrest mit Äquivalent-Gewichten bis zu 8 000, bevorzugt bis zu 4 000, die sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 bis 22, vorzugsweise 1 bis 10, C-Atomen ergeben, wobei die araliphatischen bzw. die aromatischen Reste sich von Benzol, Alkyl- bzw. Alkylenbenzolen mit bis 18 C-Atomen, Naphthalin, Diphenyl, Diphenylmethan, Diphenyläthan oder 2,2-Diphenylpropan ableiten, und gegebenenfalls im Kern durch 1 oder 2 Methoxy- bzw. Äthoxygruppen bzw. im Kern und/oder in den Seitenketten durch F-, Cl-, Br-Atome, vorzugsweise bis fünfmal substituiert sein können ; oder ein phosphorhaltiger Rest der allgemeinen Formel

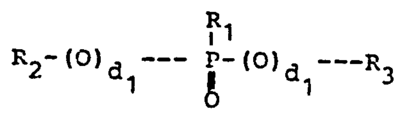

$Z_{n,1}$

in dem

$d_1$, unabhängig voneinander 0 und 1 und

$R_1$ Alkyl-, Hydroxyalkyl-, gegebenenfalls ($C_1$-$C_2$)-alkyliertes bzw. -dialkyliertes Aminoalkyl, Halogen-(vorzugsweise Cl-) alkyl mit 1 bis 3 C-Atomen, Alkenyl mit oder 3 C-Atomen oder Phenyl, das gegebenenfalls durch 1 oder 2 Halogenatome, vorzugsweise Cl, Br substituiert sein kann, sind und

$R_2$, $R_3$ das gleich wie $R_1$ bedeuten mit der Einschränkung, daß mindestens einer der Reste $R_2$ oder $R_3$ ein Alkylenrest mit 2-5 C-Atomen ist ;

oder ein phosphorhaltiger Rest der Formel

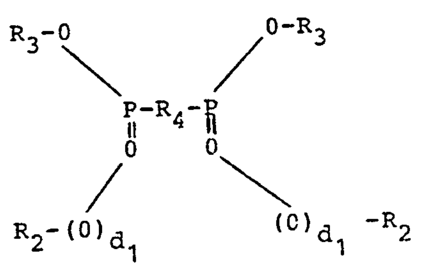

$Z_{n,2}$

in dem $d_1$, $R_2$, $R_3$ Bedeutungen wie in $Z_{n,1}$ haben und $R_4$ einen geradkettigen oder verzweigten ($C_1$-$C_{10}$-)-Alkylen-, Phenylen-, Xylylen-Rest oder einen Rest

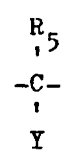

mit Y = OH, $NH_2$ und $R_5$ ($C_1$-$C_3$-)-Alkyl bedeuten ; oder ein phosphorhaltiger Rest der allgemeinen Formel

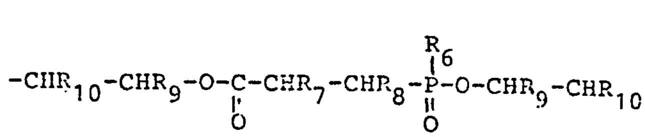

$Z_{n,3}$

in dem

$R_6$ eine ($C_1$-$C_4$)-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere

Cyclopentyl, Cyclohexyl, eine Alkylengruppe mit bis zu 4 C-Atomen, insbesondere Vinyl und Allyl, eine Phenyl oder Benzylgruppe, die gegebenenfalls durch Halogen, vorzugsweise Chlor und/oder Brom, substituiert, vorzugsweise 1- bis 3-mal substituiert sein kann,

$R_7$ Wasserstoff oder eine ($C_1$-$C_4$)-Alkylgruppe, bevorzugt Methyl,

$R_8$ Wasserstoff oder eine ($C_1$-$C_2$)-Alkylgruppe, bevorzugt Methyl, wobei mindestens einer der Reste $R_7$, $R_8$ Wasserstoff ist,

$R_9$ Wasserstoff, Methyl, Chlormethyl,

$R_{10}$ Wasserstoff, Methyl oder Äthyl, vorzugsweise Wasserstoff bedeuten, dadurch gekennzeichnet daß man 1 Mol einer Verbindung der allgemeinen Formel II

$$Z_n\,(OH)_n \qquad (II)$$

mit 1 bis n.25 Molen von in 2-Stellung substituierten 2-Oxo-oxa-phospholanen der allgemeinen Formel III

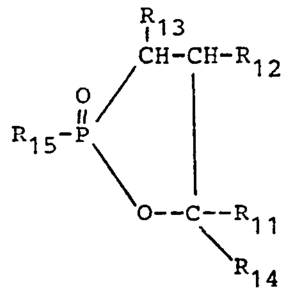

(III)

umsetzt, wobei n, $R_{11}$, $R_{12}$, $R_{13}$, $R_{14}$ und $R_{15}$ und $Z_n$ die oben angegebenen Bedeutungen haben.

2. Verwendung der Phosphor-Verbindungen gemäß Anspruch 1 als Flammhemmittel für Textilmaterial.

**Claims** (for the contracting States : BE, CH, DE, FR, GB, IT, NL)

1. Organic phosphorus compounds possessing 3-hydroxyalkylphosphinic acid ester groups, of the general formula I

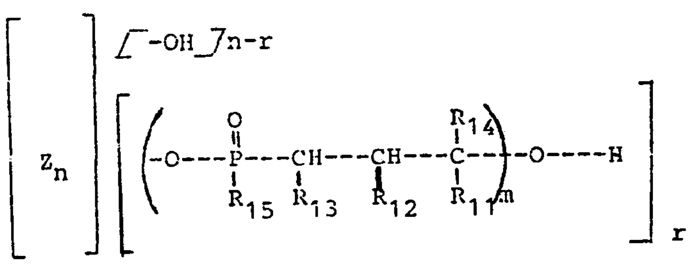

(I)

wherein the individual symbols in the above formula I have the following meaning :

n is an integer from 1 to 6, preferably 1 to 4 ;

r is an integer from 1 to 6, and is preferably the same number as n ;

m is 1 if $r < n$, or is a number from 1 to 150, preferably 2 to 10, if r is equal to n ;

$R_{11}$, $R_{12}$, $R_{13}$ and $R_{14}$ are identical or different, optionally unsaturated and/or branched alkyl radicals with 1 to 4 carbon atoms or, preferably, are hydrogen ;

$R_{15}$ has the same meaning as $R_{11}$, other than hydrogen, and is preferably ($C_1$-$C_3$)-alkyl, and particularly preferentially methyl ;

$Z_n$ is a n-valent radical from the group of straight-chain or branched aliphatic or araliphatic hydrocarbon radicals with 1 to 22, preferably 1 to 8, C atoms, which can optionally be interrupted by up to 2-S- and/or NR- radicals, where R is ($C_1$-$C_4$)-alkyl, especially methyl, and/or be substituted by fluorine, chlorine or bromide atoms or by optionally unsaturated carboxylic acid ester groups or carboxamide, carbamate or urea groups or by primary, secondary or tertiary amino groups ; or is a hydrocarbon radical, containing ether groups, with equivalent weights of up to 8,000, preferably up to 4,000, resulting from oxyethylation and/or oxypropylation of n-valent aliphatic, araliphatic or aromatic hydroxyl compounds, amines and/or monocarboxylic or dicarboxylic acids, with 1 to 22, preferably 1 to 10, C atoms, the araliphatic or aromatic radicals being derived from benzene, alkylbenzenes or alkylenebenzenes with up to 18 C atoms, naphthalene, diphenyl, diphenylmethane, diphenylethane or 2,2-diphenylpropane, and being optionally substituted in the nucleus by 1 or 2 methoxy or ethoxy groups, or optionally substituted, preferably up to five times, in the nucleus and/or in the side chains by F, Cl or Br atoms ; or is a phosphorus-containing radical of the general formula

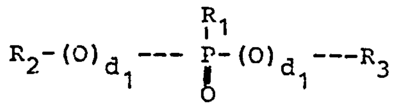

$Z_{n,1}$

in which

the indices $d_1$, independently of one another are 0 and 1 and

$R_1$ is alkyl, hydroxyalkyl, optionally ($C_1$-$C_2$)-alkylated or -dialkylated aminoalkyl, halogenoalkyl (preferably Cl-alkyl) with 1 to 3 C atoms, alkenyl with 2 or 3 C atoms or phenyl, which can optionally be substituted by 1 or 2 halogen atoms, preferably Cl or Br, and

$R_2$ and $R_3$ have the same meaning as $R_1$, with the restriction that at least one of the radicals $R_2$ or $R_3$ is an alkylene radical with 2-5 C atoms ;

or is a phosphorus-containing radical of the formula

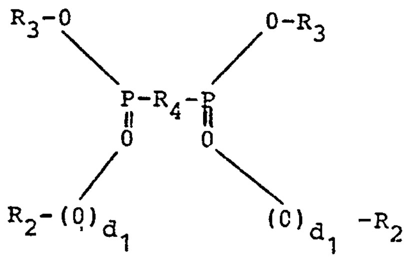

$Z_{n,2}$

in which $d_1$, $R_2$ and $R_3$ have the same meanings as in $Z_{n,1}$ and $R_4$ denotes a straight-chain or branched ($C_1$-$C_{10}$)-alkylene, phenylene or xylylene radical or a radical where Y is OH or $NH_2$ and $R_5$ is ($C_1$-$C_3$)-alkyl ;

or is a phosphorus-containing radical of the general formula

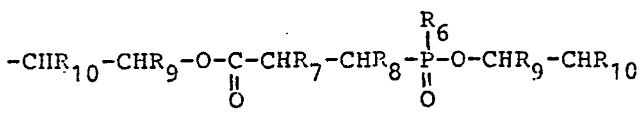

$Z_{n,3}$

in which

$R_6$ denotes a ($C_1$-$C_4$)-alkyl group which can optionally be substituted, preferably monosubstituted, by halogen, especially chlorine, a cycloalkyl group with up to 8 C atoms, especially cyclopentyl or cyclohexyl, an alkylene group with up to 4 C atoms, especially vinyl and allyl, or a phenyl or benzyl group which is optionally substituted, preferably monosubstituted, disubstituted or trisubstituted, by halogen, preferably chlorine and/or bromine,

$R_7$ denotes hydrogen or a ($C_1$-$C_4$)-alkyl group, preferably methyl,

$R_8$ denotes hydrogen or a ($C_1$-$C_2$)-alkyl group, preferably methyl, but at least one of the radicals $R_7$ and $R_8$ is hydrogen,

$R_9$ denotes hydrogen, methyl or chloromethyl and

$R_{10}$ denotes hydrogen, methyl or ethyl, preferably hydrogen.

2. Process for the preparation of the phosphorus compounds according to Claim 1, wherein 1 mole of a compound of the general formula II

$$Z_n(OH)_n \qquad (II)$$

is reacted with 1 to n.25 moles of 2-substituted 2-oxo-oxa-phospholanes of the general formula III

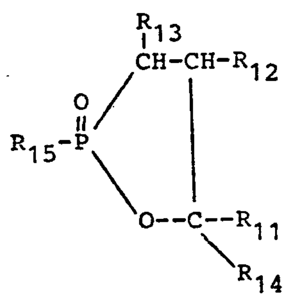

(III)

wherein n, $R_{11}$, $R_{12}$, $R_{13}$, $R_{14}$ and $R_{15}$, and $Z_n$, have the meanings given above.

3. Use of the phosphorus compounds according to Claim 1 as flame-retardant agents for textile material.

**Claims** (for the contracting State AT)

1. Process for the preparation of organic phosphorus compounds possessing 3-hydroxyalkylphosphinic acid ester groups, of the general formula I

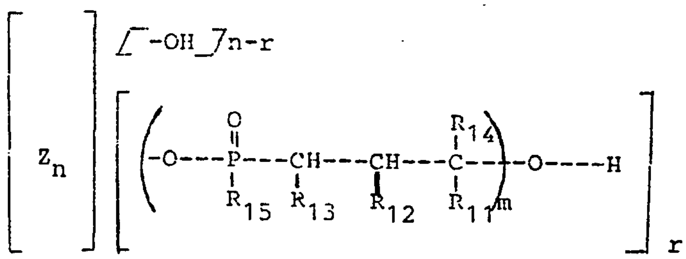

(I)

wherein the individual symbols in the above formula I have the following meaning :

n is an integer from 1 to 6, preferably 1 to 4 ;

r is an integer from 1 to 6, and is preferably the same number as n ;

m is 1 if $r < n$, or is a number from 1 to 150, preferably 2 to 10, if r is equal to n ;

$R_{11}$, $R_{12}$, $R_{13}$ and $R_{14}$ are identical or different, optionally unsaturated and/or branched alkyl radicals with 1 to 4 carbon atoms or, preferably, are hydrogen ;

$R_{15}$ has the same meaning as $R_{11}$, other than hydrogen, and is preferably ($C_1$-$C_3$)-alkyl, and particularly preferentially methyl ;

$Z_n$ is a n-valent radical from the group of straight-chain or branched aliphatic or araliphatic hydrocarbon radicals with 1 to 22, preferably 1 to 8, C atoms, which can optionally be interrupted by up to 2 -S- and/or -NR- radicals, where R is ($C_1$-$C_4$)-alkyl, especially methyl, and/or be substituted by fluorine, chlorine or bromide atoms or by optionally unsaturated carboxylic acid ester groups or carboxamide, carbamate or urea groups or by primary, secondary or tertiary amino groups ; or is a hydrocarbon radical, containing ether groups, with equivalent weights of up to 8,000, preferably up to 4,000, resulting from oxyethylation and/or oxypropylation of n-valent aliphatic, araliphatic or aromatic hydroxyl compounds, amines and/or monocarboxylic or dicarboxylic acids, with 1 to 22, preferably 1 to 10 C atoms, the araliphatic or aromatic radicals being derived from benzene, alkylbenzenes or alkylenebenzenes with up to 18 C atoms, naphthalene, diphenyl, diphenylmethane, diphenylethane or 2,2-diphenylpropane, and being optionally substituted in the nucleus by 1 or 2 methoxy or ethoxy groups, or optionally substituted, preferably up to five times, in the nucleus and/or in the side chains by F, Cl or Br atoms ; or is a phosphorus-containing radical of the general formula

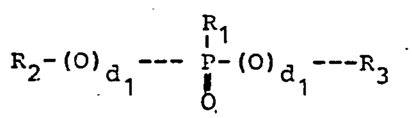

$Z_{n,1}$.

in which

the indices $d_1$, independently of one another are 0 and 1 and

$R_1$ is alkyl, hydroxyalkyl, optionally ($C_1$-$C_2$)-alkylated or -dialkylated aminoalkyl, halogenoalkyl (preferably Cl-alkyl) with 1 to 3 C atoms, alkenyl with 2 or 3 C atoms or phenyl, which can optionally be substituted by 1 or 2 halogen atoms, preferably Cl or Br, and

$R_2$ and $R_3$ have the same meaning as $R_1$, with the restriction that at least one of the radicals $R_2$ or $R_3$ is an alkylene radical with 2-5 C atoms ;

or is a phosphorus-containing radical of the formula

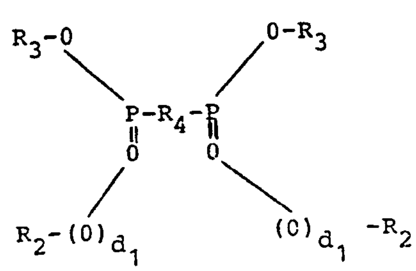

$Z_{n,2}$

in which $d_1$, $R_2$ and $R_3$ have the same meanings as in $Z_{n,1}$ and $R_4$ denotes a straight-chain or branched ($C_1$-$C_{10}$)-alkylene, phenylene or xylylene radical or a radical

where Y is OH or $NH_2$ and $R_5$ is $(C_1$-$C_3)$-alkyl ;
or is a phosphorus-containing radical of the general formula

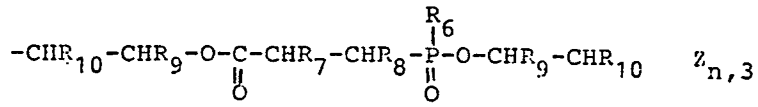

in which

$R_6$ denotes a $(C_1$-$C_4)$-alkyl group which can optionally be substituted, preferably monosubstituted, by halogen, especially chlorine, a cycloalkyl group with up to 8 C atoms ; especially cyclopentyl or cyclohexyl, an alkylene group with up to 4 C atoms, especially vinyl and allyl, or a phenyl or benzyl group which is optionally substituted, preferably monosubstituted, disubstituted or trisubstituted, by halogen, preferably chlorine and/or bromine,

$R_7$ denotes hydrogen or a $(C_1$-$C_4)$-alkyl group, preferably methyl,

$R_8$ denotes hydrogen or a $(C_1$-$C_2)$-alkyl group, preferably methyl, but at least one of the radicals $R_7$ and $R_8$ is hydrogen,

$R_9$ denotes hydrogen, methyl or chloromethyl and

$R_{10}$ denotes hydrogen, methyl or ethyl, preferably hydrogen, which is characterized by reacting 1 mole of a compound of the general formula II

$$Zn\,(OH)_n \qquad (II)$$

with 1 to n.25 moles of 2-substituted 2-oxo-oxa-phospholanes of the general formula III

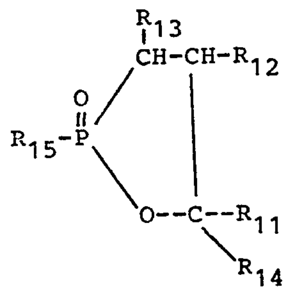

(III)

wherein n, $R_{11}$, $R_{12}$, $R_{13}$, $R_{14}$ and $R_{15}$, and $Z_n$, have the meanings given above.

2. Use of the phosphorus compounds according to claim 1 as flame-retardant agents for textile material.

**Revendications** (pour les Etats contractants : BE, CH, DE, FR, GB, IT, NL)

1. Composés organiques du phosphore comportant des groupes ester d'acide hydroxy-3-alkylphosphinique et caractérisés en ce qu'ils répondent à la formule générale (I)

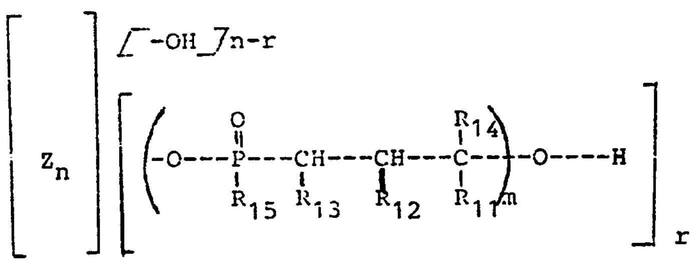

(I)

dans laquelle les symboles individuels ont la signification suivante :

n est un nombre entier valant 1 à 6, de préférence 1 à 4 ;

r est un nombre entier valant 1 à 6 et qui de préférence a la même valeur que n ;

m vaut 1, lorsque r est inférieur à n, ou bien m est un nombre valant 1 à 150, de préférence 2 à 10, lorsque r est égal à n ;

$R_{11}$, $R_{12}$, $R_{13}$ et $R_{14}$ représentent des radicaux alkyles, identiques ou différents, éventuellement insaturés et/ou ramifiés, comportant 1 à 4 atomes de carbone, ou représentent de préférence de l'hydrogène ;

$R_{15}$ a le même sens que $R_{11}$ mais ne représente pas un atome d'hydrogène et est de préférence un

groupe alkyle en $C_1$-$C_3$ et, de façon tout particulièrement préférée, $R_{15}$ est un groupe méthyle ;

$Z_n$ est un radical de valence n, choisi parmi les radicaux hydrocarbonés aliphatiques ou araliphatiques, linéaires ou ramifiés, comportant 1 à 22, de préférence 1 à 8, atomes de carbone, qui peuvent être éventuellement interrompus par jusqu'à 2 radicaux -S- et/ou -NR-, dans lesquels R est un groupe alkyle en $C_1$-$C_4$, notamment un groupe méthyle, et/ou peuvent être substitués par des atomes de fluor, de chlore, de brome ou éventuellement par des groupes ester d'acide carboxylique insaturé ou par des groupes carboxamide, carbamate ou urée ou par des groupes amino primaire, secondaire ou tertiaire ; où $Z_n$ est un radical d'hydrocarbure contenant des groupes éther et ayant des poids d'équivalent jusqu'à 8 000, de préférence jusqu'à 4 000, que l'on obtient par oxyéthylation et/ou oxypropylation de composés aliphatiques, araliphatiques ou aromatiques comportant n hydroxyles, d'amines et/ou d'acides mono- ou dicarboxyliques comportant 1 à 22, de préférence 1 à 10 atomes de carbone, les radicaux araliphatiques ou aromatiques provenant du benzène, d'alkylbenzènes ou d'alkylènebenzènes ayant jusqu'à 18 atomes de carbone, du naphtalène, du diphényle, du diphénylméthane, du diphényléthane ou du diphényl-2,2 propane, et qui peuvent éventuellement être substitués dans le noyau par un ou deux groupes méthoxy ou éthoxy ou être substitués, de préférence jusqu'à cinq fois, dans le noyau et/ou dans les chaînes latérales par des atomes de fluor, de chlore, de brome ; ou bien $Z_n$ est un radical contenant du phosphore et répondant à la formule générale

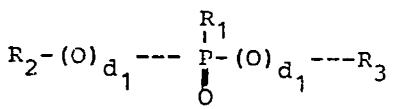

$Z_{n,1}$

dans laquelle

les nombres $d_1$ valent, indépendamment l'un de l'autre, 0 ou 1 ; et

$R_1$ est un groupe alkyle, hydroxyalkyle, aminoalkyle (éventuellement mono- ou di-alkylé par un groupe alkyle en $C_1$-$C_2$), un groupe halogénoalkyle (de préférence chloroalkyle) comportant 1 à 3 atomes de carbone, alcényle ayant 2 ou 3 atomes de carbone ou phényle, qui peut éventuellement être substitué par 1 ou 2 atomes d'halogène, de préférence Cl, Br, et

$R_2$ et $R_3$ ont le même sens que $R_1$, étant bien entendu que l'un au moins des radicaux $R_2$ et $R_3$ est un radical alcényle ayant 2 à 5 atomes de carbone ;

ou un radical contenant du phosphore et répondant à la formule

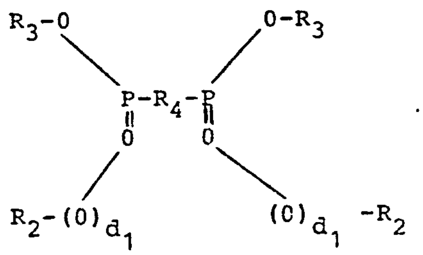

$Z_{n,2}$

dans laquelle $d_1$, $R_2$ et $R_3$ ont les mêmes significations que dans la formule ($Z_{n,1}$) et $R_4$ représente un radical alkylène linéaire ou ramifié (en $C_1$ à $C_{10}$), phénylène, xylylène ou un radical

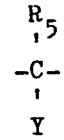

dans lequel Y représente OH ou $NH_2$ et $R_5$ est un groupe alkyle en $C_1$-$C_3$ ;

ou un radical contenant du phosphore et répondant à la formule générale

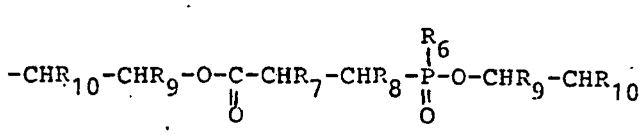

$Z_{n,3}$

dans laquelle :

$R_6$ représente un groupe alkyle en $C_1$-$C_4$, qui peut éventuellement être substitué par de l'halogène, notamment du chlore et de préférence est substitué une fois, un groupe cycloalkyle ayant jusqu'à 8 atomes de carbone, notamment un groupe cyclopentyle ou cyclohexyle, un groupe alkylène ayant jusqu'à 4 atomes de carbone, notamment un groupe vinyle ou allyle, un groupe phényle ou benzyle qui peut éventuellement être substitué, de préférence une à trois fois, par de l'halogène, de préférence du chlore et/ou du brome,

$R_7$ est un atome d'hydrogène ou un groupe alkyle en $C_1$-$C_4$, et est de préférence un groupe méthyle,

$R_8$ est un atome d'hydrogène ou un groupe alkyle en $C_1$ ou $C_2$, de préférence un groupe méthyle, l'un au moins des radicaux $R_7$ et $R_8$ étant un atome d'hydrogène,

$R_9$ est un atome d'hydrogène ou un groupe méthyle ou chlorométhyle, et

$R_{10}$ est un atome d'hydrogène ou un groupe méthyle ou éthyle représente de préférence un atome d'hydrogène.

2. Procédé de production des composés phosphorés selon la revendication 1, caractérisé en ce qu'on fait réagir 1 mole d'un composé de formule générale (II) :

$$Z_n\,(OH)_n \qquad (II)$$

avec 1 à n.25 moles d'oxo-2 oxaphospholanes substitués en position 2 et répondant à la formule générale (III) :

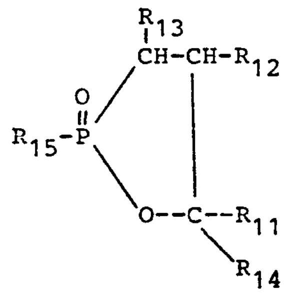

(III)

les symboles n, $R_{11}$, $R_{12}$, $R_{13}$, $R_{14}$, $R_{15}$ et $Z_n$ ayant les sens indiqués à la revendication 1.

3. Application des composés phosphorés selon la revendication 1 comme agent d'ignifugation pour une matière textile.

**Revendications** (pour l'Etat contractant AT)

1. Procédé de production de composés organiques du phosphore comportant des groupes ester d'acide hydroxy-3-alkylphosphinique et répondant à la formule générale (I)

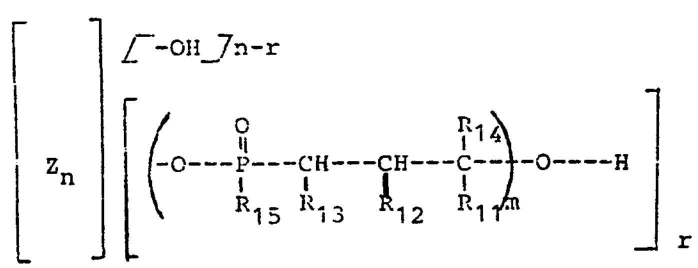

(I)

dans laquelle les symboles individuels ont la signification suivante :

n est un nombre entier valant 1 à 6, de préférence 1 à 4 ;

r est un nombre entier valant 1 à 6 et qui de préférence a la même valeur que n ;

m vaut 1, lorsque r est inférieur à n, ou bien m est un nombre valant 1 à 150, de préférence 2 à 10, lorsque r est égal à n ;

$R_{11}$, $R_{12}$, $R_{13}$ et $R_{14}$ représentent des radicaux alkyles, identiques ou différents, éventuellement insaturés et/ou ramifiés, comportant 1 à 4 atomes de carbone, ou représentent de préférence de l'hydrogène ;

$R_{15}$ a le même sens que $R_{11}$ mais ne représente pas un atome d'hydrogène et est de préférence un groupe alkyle en $C_1$-$C_3$ et, de façon tout particulièrement préférée, $R_{15}$ est un groupe méthyle ;

$Z_n$ est un radical de valence n, choisi parmi les radicaux hydrocarbonés aliphatiques ou araliphatiques, linéaires ou ramifiés, comportant 1 à 22, de préférence 1 à 8, atomes de carbone, qui peuvent être éventuellement interrompus par jusqu'à 2 radicaux -S- et/ou -NR-, dans lesquels R est un groupe alkyle en $C_1$-$C_4$, notamment un groupe méthyle, et/ou peuvent être substitués par des atomes de fluor, de chlore, de brome ou éventuellement par des groupes ester d'acide carboxylique insaturé ou par des groupes carboxamide, carbamate ou urée ou par des groupes amino primaire, secondaire ou tertiaire ; où $Z_n$ est un radical d'hydrocarbure contenant des groupes éther et ayant des poids d'équivalent jusqu'à 8 000, de préférence jusqu'à 4 000, que l'on obtient par oxyéthylation et/ou oxypropylation de composés aliphatiques, araliphatiques ou aromatiques comportant n hydroxyles, d'amines et/ou d'acides mono- ou dicarboxyliques comportant 1 à 22, de préférence 1 à 10 atomes de carbone, les radicaux araliphatiques ou aromatiques provenant du benzène, d'alkylbenzènes ou d'alkylènebenzènes ayant jusqu'à 18 atomes

de carbone, du naphtalène, du diphényle, du diphénylméthane, du diphényléthane ou du diphényl-2,2 propane, et qui peuvent éventuellement être substitués dans le noyau par un ou deux groupes méthoxy ou éthoxy ou être substitués, de préférence jusqu'à cinq fois, dans le noyau et/ou dans les chaînes latérales par des atomes de fluor, de chlore, de brome ; ou bien $Z_n$ est un radical contenant du phosphore et répondant à la formule générale

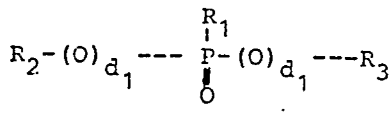

$Z_{n,1}$

dans laquelle :

les nombres $d_1$ valent, indépendamment l'un de l'autre, 0 ou 1 ; et

$R_1$ est un groupe alkyle, hydroxyalkyle, aminoalkyle (éventuellement mono- ou di-alkylé par un groupe alkyle en $C_1$-$C_2$), un groupe halogénoalkyle (de préférence chloroalkyle) comportant 1 à 3 atomes de carbone, alcényle ayant 2 ou 3 atomes de carbone ou phényle, qui peut éventuellement être substitué par 1 ou 2 atomes d'halogène, de préférence Cl, Br et

$R_2$ et $R_3$ ont le même sens que $R_1$, étant bien entendu que l'un au moins des radicaux $R_2$ et $R_3$ est un radical alcényle ayant 2 à 5 atomes de carbone ;

ou un radical contenant du phosphore et répondant à la formule

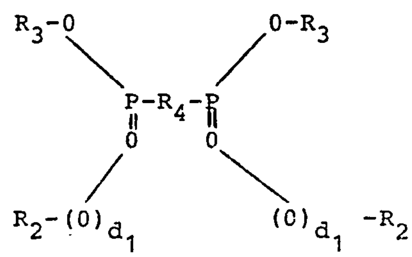

$Z_{n,2}$

dans laquelle $d_1$, $R_2$ et $R_3$ ont les mêmes significations que dans la formule ($Z_{n,1}$) et $R_4$ représente un radical alkylène linéaire ou ramifié (en $C_1$ à $C_{10}$), phénylène, xylylène ou un radical

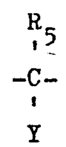

dans lequel Y représente OH ou $NH_2$ et $R_5$ est un groupe alkyle en $C_1$-$C_3$ ;
ou un radical contenant du phosphore et répondant à la formule générale

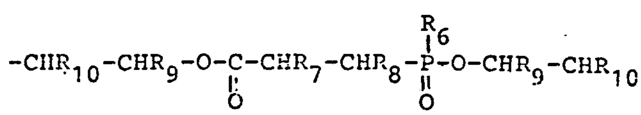

$Z_{n,3}$

dans laquelle :

$R_6$ représente un groupe alkyle en $C_1$-$C_4$, qui peut éventuellement être substitué par de l'halogène, notamment du chlore et de préférence est substitué une fois, un groupe cycloalkyle ayant jusqu'à 8 atomes de carbone, notamment un groupe cyclopentyle ou cyclohexyle, un groupe alkylène ayant jusqu'à 4 atomes de carbone, notamment un groupe vinyle ou allyle, un groupe phényle ou benzyle qui peut éventuellement être substitué, de préférence une à trois fois, par de l'halogène, de préférence du chlore et/ou du brome,

$R_7$ est un atome d'hydrogène ou un groupe alkyle en $C_1$-$C_4$, et est de préférence un groupe méthyle,

$R_8$ est un atome d'hydrogène ou un groupe alkyle en $C_1$ ou $C_2$, de préférence un groupe méthyle, l'un au moins des radicaux $R_7$ et $R_8$ étant un atome d'hydrogène,

$R_9$ est un atome d'hydrogène ou un groupe méthyle ou chlorométhyle, et

$R_{10}$ est un atome d'hydrogène ou un groupe méthyle ou éthyle et représente de préférence un atome d'hydrogène, procédé caractérisé en ce qu'on fait réagir 1 mole d'un composé de formule générale (II) :

$$Z_n\,(OH)_n \qquad (II)$$

avec 1 à n.25 moles d'oxo-2 oxaphospholanes substitués en position 2 et répondant à la formule général (III) :

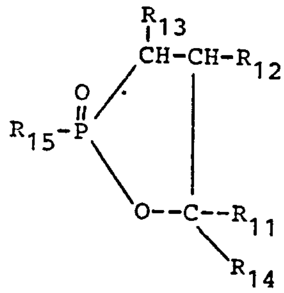

(III)

les symboles n, $R_{11}$, $R_{12}$, $R_{13}$, $R_{14}$, $R_{15}$ et $Z_n$ ayant les sens indiqués à la revendication 1.

2. Application des composés phosphorés selon la revendication 1 comme agent d'ignifugation pour une matière textile.